(19) Europäisches Patentamt
European Patent Office
Office européen des brevets

(11) EP 4 174 108 B1

(12) EUROPEAN PATENT SPECIFICATION

(45) Date of publication and mention of the grant of the patent:
**18.09.2024 Bulletin 2024/38**

(21) Application number: **22199734.9**

(22) Date of filing: **05.10.2022**

(51) International Patent Classification (IPC):
***C08G 63/91*** *(2006.01)* ***C08L 67/02*** *(2006.01)*
***G03G 9/08*** *(2006.01)* ***G03G 9/087*** *(2006.01)*

(52) Cooperative Patent Classification (CPC):
(C-Sets available)
**G03G 9/08755; C08L 67/02; G03G 9/08795; G03G 9/08797; G03G 9/097** (Cont.)

# (54) RESIN PARTICLE, TONER, DEVELOPER, DEVELOPER STORAGE CONTAINER, RESIN PARTICLE PRODUCING METHOD, TONER PRODUCING METHOD, IMAGE FORMING APPARATUS, AND IMAGE FORMING METHOD

HARZTEILCHEN, TONER, ENTWICKLER, ENTWICKLERAUFBEWAHRUNGSBEHÄLTER, HARZTEILCHENHERSTELLUNGSVERFAHREN, TONERHERSTELLUNGSVERFAHREN, BILDERZEUGUNGSVORRICHTUNG UND BILDERZEUGUNGSVERFAHREN

PARTICULE DE RÉSINE, TONER, RÉVÉLATEUR, RÉCIPIENT DE STOCKAGE DE RÉVÉLATEUR, PROCÉDÉ DE PRODUCTION DE PARTICULE DE RÉSINE, APPAREIL DE FORMATION D'IMAGE ET PROCÉDÉ DE FORMATION D'IMAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.10.2021 JP 2021177996**
**24.02.2022 JP 2022026855**

(43) Date of publication of application:
**03.05.2023 Bulletin 2023/18**

(73) Proprietor: **Ricoh Company, Ltd.**
**Tokyo 143-8555 (JP)**

(72) Inventors:
- **SATOH, Kohsuke**
  **Tokyo, 143-8555 (JP)**
- **NAGATOMO, Tsuneyasu**
  **Tokyo, 143-8555 (JP)**
- **WATANABE, Junichi**
  **Tokyo, 143-8555 (JP)**

(74) Representative: **Marks & Clerk LLP**
**15 Fetter Lane**
**London EC4A 1BW (GB)**

(56) References cited:
**JP-A- 2022 151 547** **US-A1- 2014 134 534**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 67/02, C08L 67/02, C08L 67/02, C08L 91/06**

## Description

BACKGROUND

Technical Field

The present disclosure relates to a resin particle, a toner, a developer, a developer storage container, a resin particle producing method, a toner producing method, an image forming apparatus, and an image forming method.

Related Art

Carbon neutral is a term generally used for defining biomass materials including organic matters. When such biomass materials are burned, carbon dioxide is emitted. Carbon contained in the carbon dioxide is derived from carbon dioxide absorbed from the atmosphere by the biomass materials through photosynthesis in a growing process. Thus, it is considered that, taken altogether, use of biomass materials does not increase the carbon dioxide amount in the atmosphere. This characteristic is referred to as carbon neutral.

Conventionally, the constituent materials of toners, especially binder resins have been substantially dependent on fossil resources, and it has been considered that carbon dioxide generated in disposing toners and printed images is emitted to the atmosphere, leading to e.g. global warming. Also, it can be said that conversion from fossil resources as limited resources to biomass resources as renewable resources is a conversion to sustainably renewable resources from the viewpoint that organisms are produced from solar energy, water, and carbon dioxide. This technology is in demand.

Examples of constituent materials of toners obtained from such renewable resources include, but are not limited to, release agents such as carnauba wax and candelilla wax. These release agents are blended into toners to provide a releasing function for fixation. Since a blending amount of the release agent is generally around several percent by mass, this amount is far from satisfying the carbon neutral.

In recent years, energy consumption expands with population growth, and as resources are depleted, necessity of e.g. energy and resources saving, and resource recycling has been becoming emphasized. Polyethylene terephthalate (PET) bottles have been becoming recycled by local governments and used for various types of clothing and containers. Also, there is a high demand for development of new applications allowing reuse of recycled PET. From this perspective, toner binder resins have been produced as recovered polyethylene terephthalate raw materials, and toners (recycled toners) containing these toner binder resins have been known.

Today, there is a strong demand for toners to improve toner functions while enhancing environmental adaptability using biomass-derived resins.

Japanese Patent No. 6138021, Japanese Patent No. 3693334, Japanese Patent No. 5473252, Japanese Unexamined Patent Application Publication No. 2011-257568, and Japanese Unexamined Patent Application Publication No. 2004-054258 propose toners using biodegradable resins, recycled resins, or biomass resins from the viewpoint of environmental protection.

SUMMARY

An object of the present invention is to provide resin particles suitable for environmentally-friendly toners excellent in all of fixability, storability, and durability.

To solve the aforementioned problems, embodiments of the present invention provides a resin particle including a binder resin. The binder resin contains a biomass-derived resin and a recycled resin. A content (% by mass) of the biomass-derived resin and a content (% by mass) of the recycled resin in the binder resin satisfy relational equation (1). A biomass degree (%) represented by $^{14}C$ concentration (pMC) x 0.935, is 10% or higher, wherein the $^{14}C$ concentration is determined by a radioactive carbon dating method. The recycled resin comprises at least one of polyethylene terephthalate (PET) and polybutylene terephthalate (PBT), and the recycled resin comprises products processed to flakes.

$$\text{Content of recycled resin} > \text{Content of biomass-derived resin} \ldots (1)$$

Embodiments of the present invention provide a resin particle suitable for environmentally-friendly toners excellent in all of fixability, storability, and durability.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a schematic diagram illustrating an image forming apparatus according to an embodiment of the present invention; and
FIG. 2 is a schematic diagram illustrating a process cartridge according to an embodiment of the present invention.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.
Referring now to the drawings, embodiments of the present disclosure are described below. As used herein, the singular forms "a," "an," and "the" are intended to include the plural forms as well, unless the context clearly indicates otherwise.
Embodiments of the present invention will be explained in order.
A resin particle according to an embodiment of the present invention includes at least a binder resin. The binder resin contains a biomass-derived resin and a recycled resin. A content (% by mass) of the biomass-derived resin and a content (% by mass) of the recycled resin in the binder resin satisfy relational equation (1). A biomass degree represented by $^{14}C$ concentration x 0.935, is 10% or higher, wherein the $^{14}C$ concentration is determined by a radioactive carbon dating method. The recycled resin comprises at least one of polyethylene terephthlate (PET) and polybutylene terephthalate (PBT), and the recycled resin comprises products processed to flakes.

$$\text{Content of recycled resin} > \text{Content of biomass-derived resin} \ldots (1)$$

As the binder resin, a polyester resin is preferable. For improving storability and durability, it is preferable that the polyester resin include a bisphenol A-propylene oxide (BPA-PO) or a bisphenol A-ethylene oxide (BPA-EO) as alcohol components to enhance toughness. As biomass conversion advances, usage amounts of plant-derived alcohol components have been increased, and usage amounts of BPA have been decreased. Furthermore, no use of BPA decreases toughness of the polyester resin and deteriorates storability and durability. Thus, the relational equation "content of recycled resin > content of biomass-derived resin" will be satisfied to achieve all of fixability, storability, and durability.
In the resin particle according to an embodiment of the present invention, the content of the recycled resin and the content of the biomass-derived resin in the binder resin are preferably 80% by mass or more in total.
The content of 80% by mass or more enhances environmental adaptability, and achieves all of fixability, storability, and durability.
In the resin particle according to an embodiment of the present invention, the recycled resin is at least one of polyethylene terephthalate (PET) and polybutylene terephthalate (PBT).
The resin particle according to an embodiment of the present invention preferably includes a polyester resin. Inclusion of the polyester resin provides good fixability. The resin particle according to said embodiment preferably includes a crystalline polyester resin as the polyester resin.
Inclusion of the crystalline polyester resin in the resin particles is expected to improve low-temperature fixability.
The resin particle according to an embodiment of the present invention preferably further includes a colorant and a release agent.
A toner according to an embodiment of the present invention may be prepared by adding an external additive to the resin particle embodiment further comprising a colorant and a release agent.
The toner according to said embodiment can be used as a developer in an image forming apparatus.
The developer according to said embodiment above can be contained in a developer storage container of the

image forming apparatus.

A resin particle producing method according to an embodiment of the present invention includes mixing at least one of a binder resin and a precursor of the binder resin. Here, the binder resin includes at least a biomass-derived resin and a recycled resin, and a content (% by mass) of the biomass-derived resin and a content (% by mass) of the recycled resin in the binder resin satisfy relational equation (1),

wherein the biomass degree (%) represented by $^{14}C$ concentration (pMC) x 0.935, is 10% or higher,
wherein the $^{14}C$ concentration is determined by a radioactive carbon dating method,
wherein the recycled resin comprises at least one of polyethylene terephthalate (PET) and polybutylene terephthalate (PBT), and
wherein the recycled resin comprises products processed to flakes.

$$\text{Content of recycled resin} > \text{Content of biomass-derived resin} \ldots (1)$$

The resin particle producing method according to an embodiment of the present invention may further include:

process a: dissolving or dispersing at least one of the binder resin and the precursor, optionally together with a colorant, in an organic solvent to prepare a solution;
process b: adding water to the solution to convert a phase of the solution from a water-in-oil dispersion to an oil-in-water dispersion;
process c: removing the organic solvent from the oil-in-water dispersion to obtain a fine particle dispersion liquid; and
process d: aggregating fine particles in the fine particle dispersion liquid to obtain aggregated particles.

The above production method can be implemented to obtain resin particles having improved fixability, storability, and durability.

In the resin particle producing method according to an embodiment of the present invention, the precursor of the binder resin preferably includes a prepolymer having a functional group reactive with an active hydrogen group.

Use of the prepolymer is expected to improve low-temperature fixability due to its low Tg, and to improve hot-offset resistance, storability, and durability as being elongated with an elongating agent.

A toner producing method according to an embodiment of the present invention includes adding an external additive to the resin particle obtained by the resin particle producing method according to an embodiment of the present invention.

An image forming apparatus according to an embodiment of the present invention includes:

an electrostatic latent image bearer;
an electrostatic latent image forming device configured to form an electrostatic latent image on the electrostatic latent image bearer;
a developing device containing the toner or the developer according to an embodiment of the present invention, configured to develop the electrostatic latent image using the toner or the developer to form a visible image;
a transferring device configured to transfer the visible image onto a recording medium; and
a fixing device configured to fix the transferred visible image on the recording medium.

An image forming method according to an embodiment of the present invention includes:

forming an electrostatic latent image on an electrostatic latent image bearer;
developing the electrostatic latent image using the toner or the developer according to an embodiment of the present invention to form a visible image;
transferring the visible image onto a recording medium; and
fixing the transferred visible image on the recording medium.

The resin particle, the toner, the developer, the developer storage container, the resin particle producing method, the toner producing method, the image forming apparatus, and the image forming method according to embodiments of the present invention will be explained below with reference to the drawings. It is to be noted that the present invention is not limited to the following embodiments, and changes such as other embodiments, addition, modification and deletion can be made within a scope that can be conceived by a person skilled in the art, and any aspect is included within the scope of the present invention as long as the actions and effects of the present invention are exhibited.

As described above, the resin particle according to an embodiment of the present invention can be obtained

by a production method including the following processes a to d.

process a: dissolving or dispersing at least one of a binder resin and a precursor of the binder resin, optionally together with a colorant, in an organic solvent to prepare a solution;
process b: adding water to the solution to convert a phase of the solution from a water-in-oil dispersion to an oil-in-water dispersion;
process c: removing the organic solvent from the oil-in-water dispersion to obtain a fine particle dispersion liquid; and
process d: aggregating fine particles in the fine particle dispersion liquid to obtain aggregated particles.

The above processes and materials for use in the processes will be explained below.

[Process a] (Oil Phase Preparation Process)

In the process a, at least one of the binder resin and the precursor of the binder resin (hereinafter "the binder resin precursor") is dissolved or dispersed, optionally together with a colorant, in an organic solvent to prepare a solution.
In the production method according to an embodiment of the present invention, an oil phase is first prepared by dissolving or dispersing e.g. a resin, a colorant, and a prepolymer in an organic solvent. To prepare the oil phase, e.g. the resin and the colorant should be gradually added to the organic solvent while stirring to dissolve or disperse them. As a dissolving or dispersing device, a known device may be used, e.g., a disperser such as a bead mill and a disk mill can be used.
Materials for use in the oil phase preparation process will be explained below.
The resin particle according to an embodiment of the present invention is suitable for use as a toner. The toner is obtained by adding external additives to toner base particles including resin particles.
The resin particle according to an embodiment of the present invention will be explained below, taking, as an example, a toner that is an embodiment of the resin particle according to an embodiment of the present invention.

(Environmentally-Adaptable Resin)

In the present disclosure, biomass-derived resins and recycled resins are referred to as environmentally-adaptable resins in some cases.

- Biomass-Derived Resin -

Biomass-derived resins include plant-derived compounds as raw materials. An environmental compatibility rate and a toner quality can be regulated by adjusting a ratio between petroleum-derived components and plant-derived components in alcohol and acid components.
In the toner, a concentration of radioactive carbon isotope $^{14}C$ (hereinafter, also referred to as "$^{14}C$ concentration" in some cases) should be 10.8 pMc or higher, preferably 20 pMc or higher. If the $^{14}C$ concentration is lower than 10.8 pMc, generally a biomass degree is too low.
The $^{14}C$ concentration is expressed by a biomass degree in the following equation.

$$\text{Biomass degree (\%)} = {}^{14}\text{C concentration (pMC)} \times 0.935$$

The $^{14}C$ concentration of 10.8 pMc or higher means that the biomass degree is 10% or higher, which is also a concentration desirable from the viewpoint of the carbon-neutral perspective.
To achieve the biomass degree of 10% or higher, it should be taken into consideration that biomass-derived materials are used for the binder resin as well as for the wax in the toner.
A method for measuring the $^{14}C$ concentration is not particularly limited, and can be suitably selected to suit to a particular application. A radioactive carbon dating method is particularly preferable. The measurement procedure in the method is as follows.
First, a toner is burned to reduce carbon dioxide ($CO_2$) in the toner to obtain a graphite (C). Then, the $^{14}C$ concentration in the graphite is measured by Accelerator Mass Spectroscopy (AMS). This measurement by the AMS is disclosed e.g. in Japanese Patent No. 4050051.
The $^{14}C$ is present in nature (in the atmosphere) and taken up into plants by photosynthesis during plant activity, and the $^{14}C$ concentration in plants is equilibrium with the $^{14}C$ concentration in the atmosphere (107.5 pMC). However, from when plants terminate their life activities, the $^{14}C$ intake by photosynthesis stops, and the $^{14}C$ concentration decreases according to the $^{14}C$ half-life of 5730 years.

Since fossil resources originated from organisms have gone through tens to hundreds of millions of years from the termination of the life activities, the $^{14}C$ concentration is almost undetectable.

- Recycled Resin -

Examples of the recycled resin include, but are not limited to, polypropylene (PP), polyethylene (PE), polystyrene (PS), and acrylonitrile-butadiene-styrene (ABS), and the recycled resin comprises at least one of polyethylene terephthalate (PET) and polybutylene terephthalate (PBT).

Above all, PET and PBT are particularly preferable as toner materials.

PET and PBT are recycled products processed into flakes and have weight average molecular weights (Mw) of about 30,000 to 100,000. However, PET and PBT are not limited by their molecular weight distributions, compositions, production methods, or usage forms. In addition, PET and PBT are not limited to recycled products, and off-specification fiber waste or pellets of PET and PBT may also be used. A ratio of recycled PET to be introduced during polyester resin synthesis can be adjusted to regulate an environmental compatibility rate and a toner quality.

An amorphous polyester resin B for use in the present disclosure preferably includes plant-derived alcohol and acid components for regulating the environmental compatibility rate. Furthermore, it is preferable to use a polyester resin synthesized from PET and PBT.

It is preferable to use propylene glycol as the plant-derived alcohol component, and to use terephthalic acid or succinic acid as the plant-derived acid component. These components are not limited as long as the components are derived from plants.

A content of the recycled resin in the binder resin is preferably from 55% to 95% by mass, more preferably from 60% to 90% by mass. If the content of the recycled resin is less than 55% by mass, high-temperature fixability, storability, and durability may not be achieved. If a petroleum-based resin is used for achieving them, the environmental compatibility rate cannot be increased. If the content is more than 95% by mass, low-temperature fixability may not be achieved.

A content of a biomass-derived resin in the binder resin is preferably from 5% to 45% by mass, more preferably from 10% to 40% by mass. If the content of the biomass-derived resin is less than 5% by mass, a petroleum-based resin should be used to achieve low-temperature fixability, but the environmental compatibility rate cannot be increased. If the content of the biomass-derived resin is more than 45% by mass, high-temperature fixability, storability, and durability may not be achieved. If a petroleum-based resin is used for achieving them, the environmental compatibility rate cannot be increased.

As for a content ratio of the recycled resin and the biomass-derived resin in the binder resin, recycled resin:biomass-derived resin is preferably from 95:5 to 55:45, more preferably from 90:10 to 60:40.

If the content of the recycled resin is less than 55% by mass, high-temperature fixability, storability, and durability may not be achieved. If a petroleum-based resin is used for achieving the,, the environmental compatibility rate cannot be increased. If the content of the recycled resin is more than 95% by mass, low-temperature fixability may not be achieved.

If the content of the biomass-derived resin is less than 5% by mass, a petroleum-based resin should be used to achieve low-temperature fixability, but the environmental compatibility rate cannot be increased. If the content of the biomass-derived resin is more than 45% by mass, high-temperature fixability, storability, and durability may not be achieved. If a petroleum-based resin is used for achieving them, the environmental compatibility rate cannot be increased.

(Polyester Resin)

When a resin is used as a toner for developing electrostatic latent images in electrophotography, a resin having a polyester skeleton is used to obtain good fixability. Examples of the resin having a polyester skeleton include, but are not limited to, a polyester resin, and a block polymer of a polyester resin and a resin having another skeleton.
However, it is more preferable to use a polyester resin because uniformity of resultant colored resin particles is high.

Examples of the polyester resin include, but are not limited to, a ring-opening polymer of lactones, a polycondensate of a hydroxycarboxylic acid, and a polycondensate of a polyol and a polycarboxylic acid. From the viewpoint of a degree of freedom in design, a polycondensates of a polyol and a polycarboxylic acid is preferable.

The polyester resin typically has a weight average molecular weight of from 1000 to 30000, preferably from 3000 to 15000, more preferably from 5000 to 12000. If the weight average molecular weight is less than 1000, heat-resistant storage stability deteriorates, and if the weight average molecular weight is more than 30000, low-temperature fixability of the electrostatic latent image developing toner deteriorates.

The polyester resin has a glass transition temperature in a range of 35°C or higher and 80°C or lower, preferably 40°C or higher and 70°C or lower, more preferably 45°C or higher and 65°C or lower. When the glass transition temperature is lower than 35°C, resultant colored resin particles may be deformed when placed under a high-temperature environment e.g. in midsummer, or the colored resin particles may stick to each other, thereby inhibiting an original behavior of the

particles. When the glass transition temperature is higher than 80°C, fixability of the colored resin particles when used as the electrostatic latent image developing toner deteriorates.

<Polyol>

A polyol (1) includes a diol (1-1) and a trivalent or higher polyol (1-2). The polyol (1) preferably includes the diol (1-1) alone, or a mixture of the polyol (1-1) and a small amount of the trivalent or higher polyol (1-2).

Examples of the diol (1-1) include, but are not limited to, the followings:

alkylene glycols (e.g., ethylene glycol, 1,2-propylene glycol, 1,3-propylene glycol, 1,4-butanediol, 1,6-hexanediol); alkylene ether glycols (e.g., diethylene glycol, triethylene glycol, dipropylene glycol, polyethylene glycol, polypropylene glycol, polytetramethylene ether glycol); alicyclic diols (e.g., 1,4-cyclohexane dimethanol, hydrogenated bisphenol A);

bisphenols (e.g., bisphenol A, bisphenol F, bisphenol S); alkylene oxide (e.g., ethylene oxide, propylene oxide, butylene oxide) adducts of the above alicyclic diols; 4,4'-dihydroxybiphenyls such as 3,3'-difluoro-4,4'-dihydroxybiphenyl; bis(hydroxyphenyl) alkanes such as bis(3-fluoro-4-hydroxyphenyl) methane, 1-phenyl-1,1-bis(3-fluoro-4-hydroxyphenyl) ethane, 2,2-bis(3-fluoro-4-hydroxyphenyl) propane, 2,2-bis(3,5-difluoro-4-hydroxyphenyl) propane (another name: tetrafluorobisphenol A), and 2,2-bis(3-hydroxyphenyl)-1,1,1,3,3,3-hexafluoropropane; bis(4-hydroxyphenyl) ethers such as bis(3-fluoro-4-hydroxyphenyl) ether; and

alkylene oxide (e.g., ethylene oxide, propylene oxide, butylene oxide) adducts of the above bisphenols.

Among these diols, alkylene glycols having 2 to 12 carbon atoms and alkylene oxide adducts of bisphenols are preferable, and a combination of alkylene oxide adducts of bisphenols with alkylene glycols having 2 to 12 carbon atoms is particularly preferable.

Examples of the trivalent or higher polyol (1-2) include, but are not limited to, polyvalent aliphatic alcohols having 3 to 8 valences (e.g., glycerin, trimethylolethane, trimethylolpropane, pentaerythritol, sorbitol); trivalent or higher phenols (e.g., trisphenol PA, phenol novolac, cresol novolac); and alkylene oxide adducts of the above trivalent or higher polyphenols.

<Polycarboxylic Acid>

A polycarboxylic acid (2) includes a dicarboxylic acid (2-1) and a trivalent or higher polycarboxylic acid (2-2). The polycarboxylic acid (2) is preferably the dicarboxylic acid (2-1) alone, or a mixture of the dicarboxylic acid (2-1) and a small amount of the trivalent or higher polycarboxylic acid (2-2).

Examples of the dicarboxylic acid (2-1) include, but are not limited to, alkylene dicarboxylic acids (e.g., succinic acid, adipic acid, sebacic acid); alkenylene dicarboxylic acids (e.g., maleic acid, fumaric acid); aromatic dicarboxylic acids (e.g., phthalic acid, isophthalic acid, terephthalic acid, naphthalenedicarboxylic acid); as well as 3-fluoroisophthalic acid, 2-fluoroisophthalic acid, 2-fluoroterephthalic acid, 2,4,5,6-tetrafluoroisophthalic acid, 2,3,5,6-tetrafluoroterephthalic acid, 5-trifluoromethylisophthalic acid, 2,2-bis(4-carboxyphenyl) hexafluoropropane, 2,2-bis(3-carboxyphenyl) hexafluoropropane, 2,2'-bis(trifluoromethyl)-4,4'-biphenyldicarboxylic acid, 3,3'-bis(trifluoromethyl)-4,4'-biphenyldicarboxylic acid, 2,2'-bis(trifluoromethyl)-3,3'-biphenyldicarboxylic acid, and hexafluoroisopropylidene diphthalic acid anhydride. Among these dicarboxylic acids, alkenylene dicarboxylic acids having 4 to 20 carbon atoms and aromatic dicarboxylic acids having 8 to 20 carbon atoms are preferable.

Examples of the trivalent or higher polycarboxylic acid (2-2) include, but are not limited to, aromatic polycarboxylic acids having 9 to 20 carbon atoms (e.g., trimellitic acid, pyromellitic acid). Examples of the polycarboxylic acid (2) further include acid anhydrides or lower alkyl esters (e.g., methyl ester, ethyl ester, isopropyl ester) of the above-described compounds, which are reacted with the polyol (1).

As an equivalent ratio [OH]/[COOH] of hydroxyl groups [OH] to carboxyl groups [COOH], a ratio of the polyol to the polycarboxylic acid is typically from 2/1 to 1/2, preferably from 1.5/1 to 1/1.5, more preferably from 1.3/1 to 1/1.3.

(Colorant)

As colorants according to an embodiment of the present invention, known dyes and pigments can be used. Examples of the colorants include, but are not limited to, carbon black, nigrosine dye, iron black, NAPHTHOL YELLOW S, HANSA YELLOW (10G, 5G, G), Cadmium Yellow, yellow iron oxide, loess, chrome yellow, Titan Yellow, polyazo yellow, Oil Yellow, HANSA YELLOW (GR, A, RN, R), Pigment Yellow L, BENZIDINE YELLOW (G, GR), PERMANENT YELLOW (NCG), VULCAN FAST YELLOW (5G, R), Tartrazine Lake, Quinoline Yellow Lake, ANTHRAZANE YELLOW BGL, isoindolinone yellow, red iron oxide, red lead, orange lead, cadmium red, cadmium mercury red, antimony orange,

Permanent Red 4R, Para Red, Fire Red, p-chloro-o-nitroaniline red, Lithol Fast Scarlet G, Brilliant Fast Scarlet, Brilliant Carmine BS, PERMANENT RED (F2R, F4R, FRL, FRLL, F4RH), Fast Scarlet VD, VULCAN FAST RUBINE B, Brilliant Scarlet G, LITHOL RUBINE GX, Permanent Red F5R, Brilliant Carmine 6B, Pigment Scarlet 3B, Bordeaux 5B, Toluidine Maroon, PERMANENT BORDEAUX F2K, HELIO BORDEAUX BL, Bordeaux 10B, BON MAROON LIGHT, BON MAROON MEDIUM, Eosin Lake, Rhodamine Lake B, Rhodamine Lake Y, Alizarin Lake, Thioindigo Red B, Thioindigo Maroon, Oil Red, Quinacridone Red, Pyrazolone Red, polyazo red, Chrome Vermilion, Benzidine Orange, perynone orange, Oil Orange, cobalt blue, cerulean blue, Alkali Blue Lake, Peacock Blue Lake, Victoria Blue Lake, metal-free Phthalocyanine Blue, Phthalocyanine Blue, Fast Sky Blue, INDANTHRENE BLUE (RS, BC), Indigo, ultramarine blue, prussian blue, anthraquinone blue, Fast Violet B, Methyl Violet Lake, cobalt purple, manganese purple, dioxane violet, anthraquinone violet, chrome green, zinc green, chromium oxide, viridian, emerald green, Pigment Green B, Naphthol Green B, Green Gold, Acid Green Lake, Malachite Green Lake, phthalocyanine green, anthraquinone green, titanium oxide, zinc oxide, lithopone, and mixtures thereof.

(Organic Solvent)

The organic solvent is preferably a volatile solvent having a boiling point of lower than 100°C because subsequent removal of the organic solvent is facilitated. Examples of such an organic solvent include, but are not limited to, toluene, xylene, benzene, carbon tetrachloride, methylene chloride, 1,2-dichloroethane, 1, 1,2-trichloroethane, trichloroethylene, chloroform, monochlorobenzene, dichloroethylidene, methyl acetate, ethyl acetate, methyl ethyl ketone, and methyl isobutyl ketone, methanol, ethanol, and isopropyl alcohol. Each of these solvents can be used alone or in combination with others. In a case where a resin to be dissolved or dispersed in the organic solvent has a polyester skeleton, the organic solvent is preferably selected from an ester solvent such as methyl acetate, ethyl acetate, and butyl acetate, or a ketone solvent such as methyl ethyl ketone and methyl isobutyl ketone, which has high solubility. In particular, methyl acetate, ethyl acetate, and methyl ethyl ketone are preferable for their high removability.

(Prepolymer)

The prepolymer (reactive precursor) can be exemplified by a polyester having a group reactive with an active hydrogen group. Examples of the group reactive with an active hydrogen group include, but are not limited to, an isocyanate group, an epoxy group, a carboxyl group, and an acid chloride group. Among these groups, an isocyanate group is preferable because a urethane bond or a urea bond can be introduced into the amorphous polyester resin.

The prepolymer may have a branched structure imparted by at least either trivalent or higher alcohols and trivalent or higher carboxylic acids.

Examples of the polyester resin having an isocyanate group include, but are not limited to, a reaction product of a polyester resin having an active hydrogen group with a polyisocyanate. The polyester resin having an active hydrogen group may be obtained by, for example, a polycondensation of a diol, a dicarboxylic acid, and at least one of a trivalent or higher alcohol and a trivalent or higher carboxylic acid. The trivalent or higher alcohol and the trivalent or higher carboxylic acid impart a branched structure to the polyester resin having an isocyanate group.

Examples of the diol include, but are not limited to: aliphatic diols such as ethylene glycol, 1,2-propylene glycol, 1,3-propylene glycol, 1,4-butanediol, 2-methyl-1,3-propanediol, 1,5-pentanediol, 3-methyl-1,5-pentanediol, 1,6-hexanediol, 1,8-octanediol, 1,10-decanediol, and 1,12-dodecanediol; diols having an oxyalkylene group, such as diethylene glycol, triethylene glycol, dipropylene glycol, polyethylene glycol, polypropylene glycol, and polytetramethylene glycol; alicyclic diols such as 1,4-cyclohexanedimethanol and hydrogenated bisphenol A; alicyclic diols to which an alkylene oxide such as ethylene oxide, propylene oxide, and butylene oxide is adducted; bisphenols such as bisphenol A, bisphenol F, and bisphenol S; and alkylene oxide adducts of bisphenols, e.g., bisphenols to which an alkylene oxide such as ethylene oxide, propylene oxide, butylene oxide is adducted. Above all, for adjusting the glass transition temperature of the polyester resin to 20°C or lower, aliphatic diols having 3 or more and 10 or less carbon atoms are preferred, such as 1,2-propylene glycol, 1,3-propylene glycol, 1,4-butanediol, 2-methyl-1,3-propanediol, 1,5-pentanediol, and 3-methyl-1,5-pentanediol. More preferably, the diol accounts for 50% by mol or more of alcohol components in the resin. Each of these diols can be used alone or in combination with others.

Desirably, the polyester resin is an amorphous resin. Further, the resin chain may be given a steric hindrance so that melt viscosity is reduced at the time when the toner gets fixed and the toner more easily develop low-temperature fixability. Thus, it is preferable that the main chain of the aliphatic diol has a structure represented by the following general formula (1).

$$HO\left(CR_1R_2\right)_n OH \qquad \text{General Formula (1)}$$

[where $R_1$ and $R_2$ each independently represent hydrogen atom or an alkyl group having 1 to 3 carbon atoms, n represents an odd number of from 3 to 9, and each of $R_1$ and $R_2$ in n repeating units is either the same as or different from each other]

Herein, the main chain of the aliphatic diol according to an embodiment of the present invention refers to a carbon chain that connects two hydroxyl groups of the aliphatic diol with the smallest number of carbon atoms. When the number of carbon atoms in the main chain is an odd number, the crystallinity is reduced due to parity, which is preferable. When at least one of alkyl groups having 1 to 3 carbon atoms are included in a side chain, the interaction energy between molecules in the main chain is reduced due to stericity, which is more preferable.

Examples of the dicarboxylic acid include, but are not limited to: aliphatic dicarboxylic acids such as succinic acid, adipic acid, sebacic acid, dodecanedioic acid, maleic acid, and fumaric acid; and aromatic dicarboxylic acids such as phthalic acid, isophthalic acid, terephthalic acid, and naphthalenedicarboxylic acid. In addition, anhydrides, lower (C1-C3) alkyl esters, and halides thereof may also be used. Above all, for adjusting the Tg of the polyester resin to 20°C or lower, aliphatic dicarboxylic acids having 4 or more and 12 or less carbon atoms are preferred. More preferably, the dicarboxylic acid accounts for 50% by mass or more of carboxylic acid components in the resin. Each of these dicarboxylic acids can be used alone or in combination with others.

Examples of the trivalent or higher alcohol include, but are not limited to: trivalent or higher aliphatic alcohols such as glycerin, trimethylolethane, trimethylolpropane, pentaerythritol, and sorbitol; trivalent or higher polyphenols such as trisphenol PA, phenol novolac, and cresol novolac; and alkylene oxide adducts of trivalent or higher polyphenols, e.g., trivalent or higher polyphenols to which an alkylene oxide such as ethylene oxide, propylene oxide, and butylene oxide is adducted.

Examples of the trivalent or higher carboxylic acid include, but are not limited to, trivalent or higher aromatic carboxylic acids. In particular, trivalent or higher aromatic carboxylic acids having 9 or more and 20 or less carbon atoms, such as trimellitic acid and pyromellitic acid, are preferred. In addition, anhydrides, lower (C1-C3) alkyl esters, and halides thereof may also be used.

Examples of the polyisocyanate include, but are not limited to, diisocyanates and trivalent or higher isocyanates.

The polyisocyanate is not particularly limited, and can be suitably selected to suit to a particular application. Examples of the polyisocyanate include, but are not limited to:

aromatic diisocyanates such as 1,3- and/or 1,4-phenylene diisocyanate, 2,4- and/or 2,6-tolylene diisocyanate (TDI), crude TDI, 2,4'- and/or 4,4'-diphenylmethane diisocyanate (MDI), crude MDI [phosgene compounds of crude diamino phenylmethane [a condensate of formaldehyde and aromatic amine (aniline) or a mixture thereof: a mixture of diamino phenylmethane and a small amount (e.g., 5 to 20% by mass) of tri- or higher functional polyamine]: polyallyl polyisocyanate (PAPI)], 1,5-naphthylene diisocyanate, 4,4',4"-triphenylmethane triisocyanate, and m- and p-isocyanatophenylsulfonyl isocyanate;

aliphatic diisocyanates such as ethylene diisocyanate, tetramethylene diisocyanate, hexamethylene diisocyanate (HDI), dodecamethylene diisocyanate, 1,6,11-undecane triisocyanate, 2,2,4-trimethylhexamethylene diisocyanate, lysine diisocyanate, 2,6-diisocyanatomethyl caproate, bis(2-isocyanatoethyl) fumarate, bis(2-isocyanatoethyl) carbonate, and 2-isocyanatoethyl-2,6-diisocyanatohexanoate;

alicyclic diisocyanates such as isophorone diisocyanate (IPDI), dicyclohexylmethane-4,4'-diisocyanate (hydrogenated MDI), cyclohexylene diisocyanate, methylcyclohexylene diisocyanate (hydrogenated TDI), bis(2-isocyanatoethyl)-4-cyclohexene-1,2-dicarboxylate, and 2,5- and 2,6-norbornane diisocyanate;

araliphatic diisocyanates such as m- and p-xylene diisocyanate (XDI) and $\alpha,\alpha,\alpha',\alpha'$-tetramethylxylylene diisocyanate (TMXDI);

trivalent or higher polyisocyanates such as lysine triisocyanate and a modified diisocyanate of a trivalent or higher alcohol; and

modified products of these isocyanates; as well as a mixture of two or more of these polyisocyanates. Examples of the modified isocyanates include, but are not limited to, modified isocyanates having urethane group, carbodiimide group, allophanate group, urea group, biuret group, uretdione group, uretonimine group, isocyanurate group, or oxazolidone group.

(Charge Controlling Agent)

For example, a charge controlling agent may be added to the oil phase.

As the charge controlling agent, all of known charge controlling agents can be used. Examples of the charge controlling agents include, but are not limited to, nigrosine dyes, triphenylmethane dyes, chromium-containing metal complex dyes, chelate pigments of molybdic acid, rhodamine dyes, alkoxyamines, quaternary ammonium salts (including fluorine-modified quaternary ammonium salts), alkylamides, phosphor and phosphor-containing compounds, tungsten and tungsten-containing compounds, fluorine activators, metal salts of salicylic acid, and metal salts of salicylic acid derivatives. Specific examples of the charge controlling agents include, but are not limited to, nigrosine dye BONTRON

03, quaternary ammonium salt BONTRON P-51, metal-containing azo dye BONTRON S-34, oxynaphthoic acid metal complex BONTRON E-82, salicylic acid metal complex BONTRON E-84, and phenolic condensation product BONTRON E-89 (which are manufactured by Orient Chemical Industries Co., Ltd.); quaternary ammonium salt molybdenum complexes TP-302 and TP-415 (which are manufactured by Hodogaya Chemical Co., Ltd.); quaternary ammonium salt COPY CHARGE PSY VP2038, triphenyl methane derivative COPY BLUE PR, quaternary ammonium salt COPY CHARGE NEG VP2036 and COPY CHARGE NX VP434 (which are manufactured by Hoechst AG); LRA-901 and boron complex LR-147 (which are manufactured by Japan Carlit Co., Ltd.); and copper phthalocyanine, perylene, quinacridone, azo pigments, as well as polymer compounds having a functional group such as a sulfonate group, a carboxyl group, and a quaternary ammonium group.

The amount of the charge controlling agent is determined so that the charge controlling agent exerts its function without inhibiting fixability. The charge controlling agent preferably accounts for from 0.5% to 5% by mass, preferably from 0.8% to 3% by mass, of the toner.

[Process b] (Phase Conversion and Emulsification Process)

In the process b, water is added to the solution obtained in the process a to convert the phase of the solution from a water-in-oil dispersion to an oil-in-water dispersion.

In the present disclosure, the oil phase is neutralized with e.g. ammonia water, to which ion-exchange water is added, and the solution is subjected to the phase conversion and emulsification to convert the phase of the solution from a water-in-oil dispersion to an oil-in-water dispersion to obtain a fine particle dispersion liquid.

[Process c] (Solvent Removal Process)

In the process c, the organic solvent is removed from the oil-in-water dispersion obtained in the process b to obtain a fine particle dispersion liquid.

To remove the organic solvent from the fine particle dispersion, it is possible to adopt a method in which the temperature of the entire system is gradually increased while stirring to evaporate and remove the organic solvent throughly from the droplets.

Alternatively, the obtained fine particle dispersion can also be sprayed into a dry atmosphere while stirring to remove the organic solvent thoroughly from the droplets. Alternatively, the fine particle dispersion may be decompressed while stirring to evaporate and remove the organic solvent. The latter two measures may also be used in combination with the first measure.

Examples of the dry atmosphere into which the fine particle dispersion is sprayed include, but are not limited to, heated gaseous matters such as air, nitrogen, carbon dioxide gas, and combustion gas. In particular, gaseous matters heated to above a boiling point of a solvent having the maximum boiling point among the used solvents are generally used. A desired quality can be obtained by a short-time treatment using a spray dryer, a belt dryer, or a rotary kiln.

The above method makes it possible to obtain a fine particle dispersion liquid.

[Process d] (Aggregation Process)

In the process d, the fine particles in the fine particle dispersion liquid obtained in the process c are aggregated to obtain aggregated particles.

The fine particles are aggregated while stirring the fine particle dispersion liquid until diameters of aggregates reach a prescribed particle diameter. For aggregation, existing methods can be used, such as addition of a coagulant and adjustment of pH. When adding a coagulant, the coagulant may be directly added as it is, but it is more preferable that a coagulant aqueous solution is prepared and then added because localized high concentration can be avoided. In addition, it is preferable that an aggregating salt is gradually added while observing the particle diameters of the aggregated particles.

A temperature of the dispersion liquid during aggregation is preferably around a Tg of the resin for use. An excessively low liquid temperature deteriorates the efficiency because aggregation does not sufficiently proceed, and an excessively high liquid temperature increases the aggregation speed, resulting in deterioration in a particle diameter distribution, e.g., generation of coarse particles.

Once the particle diameter reaches the desired size, the aggregation is terminated. Examples of the method of terminating the aggregation include, but are not limited to, addition of salts having low ionic valence or chelating agents, adjustment of pH, decrease in the temperature of the dispersion liquid, and dilution by addition of a large amount of aqueous media.

The above methods make it possible to obtain an aggregated particle dispersion liquid.

In the aggregation process, wax may be added as a release agent, or a crystalline resin may be added to obtain

low-temperature fixability. In this case, a dispersion liquid of wax dispersed in an aqueous medium, or a dispersion liquid of a crystalline resin dispersed in the same way is prepared, which is mixed with the aforementioned fine particle dispersion liquid and then aggregated to obtain aggregated particles with uniformly dispersed wax or crystalline resin.

The coagulant, wax, and crystalline resins will be explained below.

(Coagulant)

As the coagulant, a known coagulant can be used. Examples of the coagulant include, but are not limited to, metal salts of monovalent metals such as sodium and potassium, metal salts of bivalent metals such as calcium and magnesium, and metal salts of trivalent metals such as iron and aluminum.

By adding metal salts as the coagulant, the metal ions act as metal crosslinkers, and the polymer chains cross-link via the metal ions to aggregate. The metal cross-linking of the metal crosslinkers is expected to improve hot-offset resistance, storability, and durability.

(Wax)

The wax is not particularly limited and can be suitably selected to suit to a particular application, but a release agent having a low melting point of from 50°C to 120°C is preferred. A release agent having a low melting point, when dispersed with the resin, works effectively on an interface between a fixing roller and the toner, thereby hot offset resistance is improved even in an oilless system (in which a fixing roller is not applied with any release agent such as oil).

Preferred examples of the release agent include, but are not limited to, solders and waxes. Examples of the solders and waxes include, but are not limited to: natural waxes, e.g., plant waxes such as carnauba wax, cotton wax, sumac wax, and rice wax; animal waxes such as bees wax and lanolin; mineral waxes such as ozokerite and ceresin; and petroleum waxes such as paraffin wax, microcrystalline wax, and petrolatum wax. In addition to these natural waxes, examples of waxes include, but are not limited to: synthetic hydrocarbon waxes such as Fischer-Tropsch wax and polyethylene wax; and synthetic waxes such as ester wax, ketone wax, and ether wax. Furthermore, the following materials may also be used: fatty acid amides such as 12-hydroxystearic acid amide, stearic acid amide, phthalic anhydride imide, and chlorinated hydrocarbon; homopolymers or copolymers of polyacrylates such as poly-n-stearyl methacrylate and poly-n-lauryl methacrylate which are low-molecular-weight crystalline polymer resins (e.g., copolymer of n-stearyl acrylate-ethyl methacrylate); and crystalline polymers having a long alkyl group on a side chain. Each of these waxes can be used alone or in combination with others.

The melting point of the wax is not particularly limited and can be suitably selected to suit to a particular application, but is preferably 50°C or higher and 120°C or lower, more preferably 60°C or higher and 90°C or lower. If the melting point is 50°C or higher, the wax can be prevented from adversely affecting the heat-resistant storage stability, and if the melting point is 120°C or lower, a problem of cold offset during fixation at a low temperature can be effectively prevented.

A melt viscosity of the wax is measured at a temperature 20°C higher than the melting point of the wax, and is preferably 5 cps or higher and 1,000 cps or lower, more preferably 10 cps or higher and 100 cps or lower. If the melt viscosity is 5 cps or higher, the release property can be prevented from deteriorating, and if the melt viscosity is 1,000 cps or lower, effects of the hot-offset resistance and low-temperature fixability can be sufficiently exhibited.

A content of the wax in the toner is not particularly limited and can be suitably selected to suit to a particular application, but is preferably 0% by mass or more and 40% by mass or less, more preferably 3% by mass or more and 30% by mass or less. If the content is 40% by mass or less, toner fluidity can be prevented from deteriorating.

(Crystalline Polyester Resin)

The crystalline polyester resin is obtained from a polyol, and a polycarboxylic acid such as a polycarboxylic acid, a polycarboxylic acid anhydride, and a polycarboxylic ester, or a derivative thereof. In the present invention, the crystalline polyester resin refers to a resin obtained from a polyol, and a polycarboxylic acid such as a polycarboxylic acid, a polycarboxylic acid anhydride, and a polycarboxylic ester, or a derivative thereof, as described above. Modified polyester resins, such as a prepolymer and a resin obtained by at least one of cross-linking and elongation of the prepolymer, do not fall within the crystalline polyester resin.

<<Polyol>>

The polyol is not particularly limited and can be suitably selected to suit to a particular application. Examples of the polyol include, but are not limited to, diols and trivalent or higher alcohols. Examples of the diols include, but are not limited to, saturated aliphatic diols. Examples of the saturated aliphatic diols include, but are not limited to, straight-chain saturated aliphatic diols and branched saturated aliphatic diols. In particular, straight-chain saturated aliphatic diols are preferable, and straight-chain saturated aliphatic diols having 2 to 12 carbon atoms are more preferable. The branched saturated aliphatic diols may reduce crystallinity of the crystalline polyester resin and further reduce the melting point thereof. Practical materials for the saturated aliphatic diols having more than 12 carbon atoms are not easily available.

Examples of the saturated aliphatic diols include, but are not limited to, ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,18-octadecanediol, and 1,14-eicosane decanediol. Among these diols, ethylene glycol, 1,4-butanediol, 1,6-hexanediol, 1,8-octanediol, 1,9-nonanediol, 1,10-decanediol, and 1,12-dodecanediol are preferred for obtaining a crystalline polyester resin having high crystallinity and excellent sharply-melting property.

Examples of the trivalent or higher alcohols include, but are not limited to, glycerin, trimethylolethane, trimethylolpropane, and pentaerythritol. Each of these polyols may be used alone or in combination with others.

«Polycarboxylic Acid»

The polycarboxylic acid is not particularly limited and can be suitably selected to suit to a particular application. Examples of the polycarboxylic acid include, but are not limited to, divalent carboxylic acids and trivalent or higher carboxylic acids. Examples of the divalent carboxylic acids include, but are not limited to, saturated aliphatic dicarboxylic acids such as oxalic acid, succinic acid, glutaric acid, adipic acid, suberic acid, azelaic acid, sebacic acid, 1,9-nonanedicarboxylic acid, 1,10-decanedicarboxylic acid, 1,12-dodecanedicarboxylic acid, 1,14-tetradecanedicarboxylic acid, and 1,18-octadecanedicarboxylic acid; and aromatic dicarboxylic acids such as phthalic acid, isophthalic acid, terephthalic acid, naphthalene-2,6-dicarboxylic acid, malonic acid, and mesaconic acid. Furthermore, the examples also include, but are not limited to, anhydrides and lower (C1-C3) alkyl esters of these divalent carboxylic acids.

Examples of the trivalent or higher carboxylic acids include, but are not limited to, 1,2,4-benzenetricarboxylic acid, 1,2,5-benzenetricarboxylic acid, 1,2,4-naphthalenetricarboxylic acid, and anhydrides and lower (C1-C3) alkyl esters thereof. Each of these carboxylic acids may be used alone or in combination with others.

Preferably, the crystalline polyester resin includes a straight-chain saturated aliphatic dicarboxylic acid having 4 to 12 carbon atoms and a straight-chain saturated aliphatic diol having 2 to 12 carbon atoms. Such a crystalline polyester resin has high crystallinity and excellent sharply-melting property and thus exerts excellent low-temperature fixability. As a method for controlling the crystallinity and softening point of the crystalline polyester resin, for example, a non-linear polyester prepared by a polycondensation between alcohol components including a polyol having 3 or more valences, such as glycerin, and acid components including a polycarboxylic acid having 3 or more valences, such as trimellitic anhydride, is designed and used when synthesizing the polyester.

The molecular structure of the crystalline polyester resin according to an embodiment of the present invention can be confirmed by a solution or solid NMR measurement, as well as X-ray diffraction, a gas chromatography/mass spectrometry (GC/MS), a liquid chromatography/mass spectrometry (LC/MS), or an infrared (IR) spectroscopy. However, simply, the molecular structure can be confirmed e.g. by an absorption attributed to δCH (out-of-plane bending vibration) of olefin at $965 \pm 10$ $cm^{-1}$ or $990 \pm 10$ $cm^{-1}$ in an infrared absorption spectrum.

As the molecular weight distribution becomes narrower and the molecular weight becomes lower, the low-temperature fixability improves. As the amount of low-molecular-weight components increases, the heat-resistant storage stability deteriorates. Accordingly, as a result of intensive studies, it is preferable that a molecular weight distribution chart according to a gel permeation chromatography (GPC), with log (M) on the horizontal axis and % by weight on the vertical axis with respect to o-dichlorobenzene soluble components of the crystalline polyester resin has a peak within a range of from 3.5 to 4.0, the peak has a half value width of 1.5 or less, the weight average molecular weight (Mw) is from 3,000 to 30,000, the number average molecular weight (Mn) is from 1,000 to 10,000, and the ratio Mw/Mn is from 1 to 10.

More preferably, the weight average molecular weight (Mw) is from 5,000 to 15,000, the number average molecular weight (Mn) is from 2,000 to 10,000, and the ratio Mw/Mn is from 1 to 5.

From the viewpoint of affinity between paper and resin, the crystalline polyester resin preferably has an acid value of 5 mgKOH/g or more for achieving a desired degree of low-temperature fixability, and 7 mgKOH/g or more for preparing fine particles by a phase conversion and emulsification. On the other hand, the crystalline polyester resin preferably has an acid value of 45 mgKOH/g or less for improving hot offset resistance. A hydroxyl value of the crystalline polymer is preferably 0 mgKOH/g or more and 50 mgKOH/g or less, more preferably 5 mgKOH/g or more and 50 mgKOH/g or less for achieving a predetermined low-temperature fixability and good chargeability.

(Fusion Process)

Next, the obtained aggregated particles are fused together by heat treatment to reduce irregularities. For fusion, a dispersion liquid of the aggregated particles should be heated while stirring. A temperature of the liquid is preferably around a temperature above a Tg of the resin.

(Washing and Drying Process)

Since the toner particle dispersion liquid obtained in the aforementioned method contains sub materials such as aggregated salt in addition to toner particles, washing is performed to take out the toner particles alone from the dispersion liquid. A method for washing the toner particles is not particularly limited, and examples of the method include, but are not limited to, centrifugal separation, reduced pressure filtration, and filter press. In either method, a cake of the toner particles is obtained. If washing is insufficient in one operation, it is possible to repeat the process in which the obtained cake is redispersed in an aqueous medium to prepare a slurry and the toner particles are taken out by any of the aforementioned methods. In the case where the washing is performed by reduced pressure filtration or filter press, it is possible to let an aqueous medium pass through the cake to wash the sub materials away from the resin particles.

As the aqueous medium for use in the washing process, water or a mixed solvent of water with an alcohol such as methanol and ethanol is used. In view of cost and environmental load caused by effluent treatment, water is preferable.

After the washing process, the toner particles contain the aqueous medium in large amount. The toner particles can be isolated by removing the aqueous medium by drying. The drying can be performed by means of a dryer such as spray dryer, vacuum freeze dryer, reduced pressure dryer, standstill shelf dryer, movable shelf dryer, fluidized bed dryer, rotary dryer, and stirring dryer. It is preferable that the dried toner particles are subjected to the drying until a residual moisture content becomes lower than 1%. In a case where the dried resin particles are in the form of soft aggregate to cause an inconvenience, the soft aggregate may be loosen by cracking using an apparatus such as jet mill, henschel mixer, super mixer, coffee mill, OSTER BLENDER, and food processor.

(Annealing Process)

When the crystalline resin is added, annealing treatment is performed after the drying, so that phase separation is caused between the amorphous and crystalline resins, and fixability is improved. Specifically, the product should be stored at a temperature around a Tg of the crystalline resin for at least 10 hours.

(External Additive Applying Process)

For example, fine inorganic particles, fine polymeric particles, and cleaning aids may be added to and mixed in the toner particles obtained in the present invention for the purpose of providing fluidity, chargeability, and cleanability.

Specific examples of the mixing method include, but are not limited to, a method in which an impulsive force is applied to the mixture by blades rotating at a high speed, and a method in which the mixture is accelerated in a high-speed airflow so that the particles or the composite particles collide with each other or a collision plate. Examples of usable apparatuses include, but are not limited to, ANGMILL (manufactured by Hosokawa Micron Corporation), I-TYPE MILL (manufactured by Nippon Pneumatic Mfg. Co., Ltd.) modified to reduce the pulverizing air pressure, HYBRIDIZATION SYSTEM (manufactured by Nara Machinery Co., Ltd.), KRYPTRON SYSTEM (manufactured by Kawasaki Heavy Industries, Ltd.), and an automatic mortar.

(External Additive)

Preferably, a primary particle diameter of the fine inorganic particles is 5 nm or larger and 2 μm or smaller, more preferably 5 nm or larger and 500 nm or smaller. Preferably, a specific surface area determined by the BET method is 20 $m^2/g$ or larger and 500 $m^2/g$ or smaller. Preferably, a proportion of the fine inorganic particles for use is from 0.01 to 5% by mass based on the toner. Specific examples of the inorganic particles include, but are not limited to, silica, alumina, titanium oxide, barium titanate, magnesium titanate, calcium titanate, strontium titanate, zinc oxide, tin oxide, quartz sand, clay, mica, sand-lime, diatom earth, chromium oxide, cerium oxide, red iron oxide, antimony trioxide, magnesium oxide, zirconium oxide, barium sulfate, barium carbonate, calcium carbonate, silicon carbide, and silicon nitride.

Examples of the fine polymeric particles include, but are not limited to, polystyrene particles obtained by soap-free emulsion polymerization, suspension polymerization, or dispersion polymerization; particles of copolymer of methacrylates or acrylates; particles of polycondensation polymer such as silicone, benzoguanamine, and nylon; and thermosetting resin polymer particles.

A fluidizing agent may be surface-treated to improve its hydrophobicity to prevent deterioration of fluidity and chargeability even under high-humidity conditions. Preferred examples of a surface treating agent include, but are not limited to, silane coupling agents, silylation agents, silane coupling agents having a fluorinated alkyl group, organic titanate coupling agents, aluminum coupling agents, silicone oils, and modified silicone oils.
Examples of a cleanability improving agent for removing a developer from photoconductor or primary transfer medium when remaining thereon after image transfer include, but are not limited to: metal salts of fatty acids, such as zinc stearate and calcium stearate; and fine polymer particles prepared by soap-free emulsion polymerization, such as polymethyl methacrylate fine particles and polystyrene fine particles. Preferably, such fine polymer particles have a relatively narrow particle size distribution and a volume average particle diameter of from 0.01 to 1 μm.

(Developer)

The developer according to an embodiment of the present invention contains the toner according to an embodiment of the present invention. The developer may be either a one-component developer or a two-component developer in which the toner is mixed with a carrier. When the developer is used for a high-speed printer compatible with the recent information processing speed enhancement, the two-component developer is particularly preferable in terms of prolonging the lifetime of the printer.
In the case of the one-component developer using the aforementioned toner, even after exhaustion and refilling of the toner are repeated, fluctuation in the particle diameter of the toner is little, no toner filming is caused on a developing roller, the toner is not fused to layer thickness regulating members such as blades for thinning the toner layer, and good and stable developability and images can be obtained even after long-term use (stirring) of the developing device.
In the case of the two-component developer using the aforementioned toner, even after exhaustion and refilling of the toner are repeated for a long time, fluctuation in the particle diameter of the toner in the developer is little, and good and stable developability can be obtained even after long-term stirring of the developing device.
The developer according to an embodiment of the present invention can also be used as a replenishment developer.

<Carrier>

The carrier is not particularly limited and can be suitably selected to suit to a particular application. Preferably, the carrier includes a core material and a resin layer coating the core material.

(Developer Storage Container)

The developer storage container for storing the developer according to an embodiment of the present invention is not particular limited and can be appropriately selected from known containers. For example, the developer storage container may include a container body and a cap.
The container body is not particularly limited in e.g. size, shape, structure, and material. Preferably, the container body has a cylindrical shape. Particularly, on the inner circumferential surface of the container body, projections and recesses are formed in a spiral manner, so that the developer can move to the discharge port side as the container body rotates. More preferably, part or all of the projections and recesses formed in a spiral manner have an accordion function. Further, the container body is preferably made of a material having good dimension accuracy. Examples of such a material include, but are not limited to, resin materials such as polyester resin, polyethylene resin, polypropylene resin, polystyrene resin, polyvinyl chloride resin, polyacrylic acid, polycarbonate resin, ABS resin, and polyacetal resin.
The developer storage container is easy to preserve, transport, and handle. Therefore, the developer storage container is detachably mountable on a process cartridge or an image forming apparatus described below to supply the developer thereto.
Next, an aspect of executing a method for forming an image by the image forming apparatus according to an embodiment of the present invention will be described below with reference to FIG. 1. Although a printer is illustrated as an example of the image forming apparatus according to an embodiment of the present invention, the image forming apparatus is not particularly limited thereto as long as the image forming apparatus can form an image with a toner e.g. for copiers, facsimile machines, or multifunction peripherals.
The image forming apparatus includes a sheet feeder 210, a conveyer 220, an image forming device 230, a transfer device 240, and a fixing device 250.
The sheet feeder 210 includes a sheet feeding cassette 211 in which sheets P (serving as recording media) to be fed are stacked, and a sheet feeding roller 212 that feeds the sheets P stacked in the sheet feeding cassette 211 one by one.
The conveyer 220 includes: a roller 221 that conveys the sheet P fed by the sheet feeding roller 212 toward

the transfer device 240; a pair of timing rollers 222 that hold the leading edge of the sheet P conveyed by the roller 221 and feed the sheet P to the transfer device 240 at a predetermined timing; and an output roller 223 that ejects the sheet P having a fixed color toner image to an output tray 224.

The image forming device 230 includes: from left to right in FIG. 1 at predetermined intervals, an image forming unit Y that forms an image using a developer containing yellow toner, an image forming unit C that forms an image using a developer containing cyan toner, an image forming unit M that forms an image using a developer containing magenta toner, and an image forming unit K that forms an image using a developer containing black toner; and an irradiator 233 to emit light L. The image forming units Y, C, M, and K contain respective chargers 232Y, 232C, 232M, and 232K and respective developing devices 180Y, 180C, 180M, and 180K. The irradiator 233 and the chargers 232Y, 232C, 232M, and 232K together function as an electrostatic forming device.

Hereinafter, any of the image forming units Y, C, M, and K will be simply referred to as an image forming unit.

The developer contains a toner and a carrier. The four image forming units Y, C, M, and K have substantially the same mechanical configuration, except that the developers contained therein are different.

The transfer device 240 includes: a driving roller 241; a driven roller 242; an intermediate transfer belt 243 rotatable counterclockwise in FIG. 1 in accordance with driving of the driving roller 241; primary transfer rollers 244Y, 244C, 244M, and 244K disposed facing respective photoconductor drums 231Y, 231C, 231M, and 231 K with the intermediate transfer belt 243 therebetween; and a secondary opposing roller 245 and a secondary transfer roller 246 disposed facing each other with the intermediate transfer belt 243 therebetween at a position where the toner image is transferred onto the sheet.

The fixing device 250 includes: a fixing belt 251 that contains a heater inside to heat the sheet P; and a pressure roller 252 that is rotatably pressed against the fixing belt 251 to form a nip therebetween. The color toner image on the sheet P is applied with heat and pressure, and the color toner image is fixed. The sheet P on which the color toner image has been fixed is ejected onto the output tray 224 by the output roller 223, and a series of image forming processes is completed.

(Process Cartridge)

The process cartridge according to an embodiment of the present invention is formed to be detachably mountable on an image forming apparatus. The process cartridge includes at least an electrostatic latent image bearer confiured to bear an electrostatic latent image, and a developing device configured to develop the electrostatic latent image borne on the electrostatic latent image bearer into a toner image with the developer according to an embodiment of the present invention. The process cartridge according to an embodiment of the present invention may optionally further include other devices.

The developing device includes at least a developer container containing the developer according to an embodiment of the present invention, and a developer bearer to bear and convey the developer contained in the developer container. The developing device may further include e.g. a regulator to regulate the thickness of the developer layer borne on the developer bearer.

FIG. 2 is a diagram illustrating a process cartridge according to an embodiment of the present invention. A process cartridge 110 includes a photoconductor drum 10 exposed to light L, a corona charger 58, a developing device 40, a transfer roller 80, and a cleaner 90. A numeral 95 denotes a transfer sheet.

EXAMPLES

The embodiments of the present invention are further described in detail with reference to the following Examples but are not limited to these Examples. In the following descriptions, "parts" and "%" represent "parts by mass" and "% by mass", respectively.

<Synthesis of Ketimine Compound>

A reaction vessel equipped with a stirrer and a thermometer was charged with 170 parts of isophoronediamine and 75 parts of methyl ethyl ketone, which were allowed to react at 50°C for 5 hours. Thus, a [ketimine compound] was prepared.

The [ketimine compound] was found to have an amine value of 418 mgKOH/g.

<Synthesis of Prepolymer A>

A reaction vessel equipped with a cooling tube, a stirrer, and a nitrogen introducing tube was charged with 3-methyl-1,5-pentanediol, isophthalic acid, and a plant-derived sebacic acid together with titanium tetraisopropoxide (1,000

ppm based on resin components) such that a molar ratio of hydroxyl groups to carboxyl groups OH/COOH was 1.1, a diol component included 100% by mol of 3-methyl-1,5-pentanediol, a dicarboxylic acid component included 66% by mol of isophthalic acid and 34% by mol of sebacic acid, and an amount of trimethylolpropane in the whole monomers was 1.5% by mol. The vessel contents were heated to 200°C over a period of about 4 hours and thereafter heated to 230°C over a period of 2 hours, and the reaction was continued until outflow water was no more produced. The vessel contents were further allowed to react under reduced pressure of from 10 to 15 mmHg for 5 hours to obtain an [intermediate polyester A].

Next, a reaction vessel equipped with a cooling tube, a stirrer, and a nitrogen introducing tube was charged with the obtained [intermediate polyester A] and isophorone diisocyanate (IPDI) in a molar ratio (isocyanate groups in IPDI/hydroxyl groups in the intermediate polyester) of 2.0. The vessel contents were diluted with ethyl acetate to become a 50% ethyl acetate solution and further allowed to react at 100°C for 5 hours. Thus, a [prepolymer A] was prepared.

<Synthesis of Amorphous Polyester Resin B-1>

A four-neck flask equipped with a nitrogen introducing tube, a dewatering tube, a stirrer, and a thermocouple was charged with a flake-shaped recycled PET, a plant-derived propylene glycol, a 2-mol petroleum-derived bisphenol A ethylene oxide adduct, a plant-derived terephthalic acid, and a petroleum-derived adipic acid such that a molar ratio of the flake-shaped recycled PET (ethylene glycol unit in the PET), the plant-derived propylene glycol, and the 2-mol bisphenol A ethylene oxide adduct was 32:21 :47, a molar ratio of the flake-shaped recycled PET (terephthalic acid unit in the PET), the plant-derived terephthalic acid, and the adipic acid was 32:21 :47, and a molar ratio of hydroxyl groups to carboxyl groups OH/COOH was 1.3. The mixture was reacted with a titanium tetraisopropoxide (500 ppm based on the resin components) at normal pressure and at 230°C for 8 hours, and further reacted under reduced pressure of 10 mmHg to 15 mmHg for 4 hours. Subsequently, a trimellitic anhydride was added to the reaction vessel such that a content of the trimellitic anhydride was 1% by mol based on the whole resin component, and reacted at normal pressure and at 180°C for 3 hours. Thus, an [amorphous polyester resin B-1] was prepared.

<Synthesis of Amorphous Polyester Resin B-2>

A four-neck flask equipped with a nitrogen introducing tube, a dewatering tube, a stirrer, and a thermocouple was charged with a flake-shaped recycled PET, a plant-derived propylene glycol, a 2-mol petroleum-derived bisphenol A ethylene oxide adduct, a plant-derived terephthalic acid, and a petroleum-derived adipic acid such that a molar ratio of the flake-shaped recycled PET (ethylene glycol unit in the PET), the plant-derived propylene glycol, and the 2-mol bisphenol A ethylene oxide adduct was 51:30:19, a molar ratio of the flake-shaped recycled PET (terephthalic acid unit in the PET), the plant-derived terephthalic acid, and the adipic acid was 51:30:19, and a molar ratio of hydroxyl groups to carboxyl groups OH/COOH was 1.3. The mixture was reacted with a titanium tetraisopropoxide (500 ppm based on the resin components) at normal pressure and at 230°C for 8 hours, and further reacted under reduced pressure of 10 mmHg to 15 mmHg for 4 hours. Subsequently, a trimellitic anhydride was added to the reaction vessel such that a content of the trimellitic anhydride was 1% by mol based on the whole resin component, and reacted at normal pressure and at 180°C for 3 hours. Thus, an [amorphous polyester resin B-2] was prepared.

<Synthesis of Amorphous Polyester Resin B-3>

A four-neck flask equipped with a nitrogen introducing tube, a dewatering tube, a stirrer, and a thermocouple was charged with a flake-shaped recycled PET, a plant-derived propylene glycol, a 2-mol petroleum-derived bisphenol A ethylene oxide adduct, a plant-derived terephthalic acid, and a petroleum-derived adipic acid such that a molar ratio of the flake-shaped recycled PET (ethylene glycol unit in the PET), the plant-derived propylene glycol, and the 2-mol bisphenol A ethylene oxide adduct was 56:30:14, a molar ratio of the flake-shaped recycled PET (terephthalic acid unit in the PET), the plant-derived terephthalic acid, and the adipic acid was 56:30:14, and a molar ratio of hydroxyl groups to carboxyl groups OH/COOH was 1.3. The mixture was reacted with a titanium tetraisopropoxide (500 ppm based on the resin components) at normal pressure and at 230°C for 8 hours, and further reacted under reduced pressure of 10 mmHg to 15 mmHg for 4 hours. Subsequently, a trimellitic anhydride was added to the reaction vessel such that a content of the trimellitic anhydride was 1% by mol based on the whole resin component, and reacted at normal pressure and at 180°C for 3 hours. Thus, an [amorphous polyester resin B-3] was prepared.

<Synthesis of Amorphous Polyester Resin B-4>

A four-neck flask equipped with a nitrogen introducing tube, a dewatering tube, a stirrer, and a thermocouple was charged with a flake-shaped recycled PET, a plant-derived propylene glycol, a 2-mol petroleum-derived bisphenol

A ethylene oxide adduct, a plant-derived terephthalic acid, and a petroleum-derived adipic acid such that a molar ratio of the flake-shaped recycled PET (ethylene glycol unit in the PET), the plant-derived propylene glycol, and the 2-mol bisphenol A ethylene oxide adduct was 63:30:7, a molar ratio of the flake-shaped recycled PET (terephthalic acid unit in the PET), the plant-derived terephthalic acid, and the adipic acid was 63:30:7, and a molar ratio of hydroxyl groups to carboxyl groups OH/COOH was 1.3. The mixture was reacted with a titanium tetraisopropoxide (500 ppm based on the resin components) at normal pressure and at 230°C for 8 hours, and further reacted under reduced pressure of 10 mmHg to 15 mmHg for 4 hours. Subsequently, a trimellitic anhydride was added to the reaction vessel such that a content of the trimellitic anhydride was 1% by mol based on the whole resin component, and reacted at normal pressure and at 180°C for 3 hours. Thus, an [amorphous polyester resin B-4] was prepared.

<Synthesis of Amorphous Polyester Resin B-5>

A four-neck flask equipped with a nitrogen introducing tube, a dewatering tube, a stirrer, and a thermocouple was charged with a flake-shaped recycled PET, a plant-derived propylene glycol, a 2-mol petroleum-derived bisphenol A ethylene oxide adduct, a plant-derived terephthalic acid, and a petroleum-derived adipic acid such that a molar ratio of the flake-shaped recycled PET (ethylene glycol unit in the PET), the plant-derived propylene glycol, and the 2-mol bisphenol A ethylene oxide adduct was 16:37:47, a molar ratio of the flake-shaped recycled PET (terephthalic acid unit in the PET), the plant-derived terephthalic acid, and the adipic acid was 16:37:47, and a molar ratio of hydroxyl groups to carboxyl groups OH/COOH was 1.3. The mixture was reacted with a titanium tetraisopropoxide (500 ppm based on the resin components) at normal pressure and at 230°C for 8 hours, and further reacted under reduced pressure of 10 mmHg to 15 mmHg for 4 hours. Subsequently, a trimellitic anhydride was added to the reaction vessel such that a content of the trimellitic anhydride was 1% by mol based on the whole resin component, and reacted at normal pressure and at 180°C for 3 hours. Thus, an [amorphous polyester resin B-5] was prepared.

<Synthesis of Amorphous Polyester Resin B-6>

A four-neck flask equipped with a nitrogen introducing tube, a dewatering tube, a stirrer, and a thermocouple was charged with a flake-shaped recycled PET, a plant-derived propylene glycol, a 2-mol petroleum-derived bisphenol A ethylene oxide adduct, a plant-derived terephthalic acid, and a petroleum-derived adipic acid such that a molar ratio of the flake-shaped recycled PET (ethylene glycol unit in the PET), the plant-derived propylene glycol, and the 2-mol bisphenol A ethylene oxide adduct was 24:29:47, a molar ratio of the flake-shaped recycled PET (terephthalic acid unit in the PET), the plant-derived terephthalic acid, and the adipic acid was 24:29:47, and a molar ratio of hydroxyl groups to carboxyl groups OH/COOH was 1.3. The mixture was reacted with a titanium tetraisopropoxide (500 ppm based on the resin components) at normal pressure and at 230°C for 8 hours, and further reacted under reduced pressure of 10 mmHg to 15 mmHg for 4 hours. Subsequently, a trimellitic anhydride was added to the reaction vessel such that a content of the trimellitic anhydride was 1% by mol based on the whole resin component, and reacted at normal pressure and at 180°C for 3 hours. Thus, an [amorphous polyester resin B-6] was prepared.

The compositions of the amorphous polyester resins B-1 to B-6 are presented in Table 1.

Table 1

| | | | | B-1 | B-2 | B-3 | B-4 | B-5 | B-6 |
|---|---|---|---|---|---|---|---|---|---|
| Alcohol component | Ethylene glycol | Recycle | mol% | 55 | 40 | 40 | 40 | 30 | 37 |
| | Propylene glycol | Biomass | mol% | 45 | 60 | 60 | 60 | 70 | 63 |
| | Total | | mol% | 100 | 100 | 100 | 100 | 100 | 100 |
| Acid component | Terephthalic acid | Recycle | mol% | 15 | 65 | 77 | 90 | 15 | 15 |
| | Adipic acid | Petroleum | mol% | 85 | 35 | 23 | 10 | 85 | 85 |
| | | Total | mol% | 100 | 100 | 100 | 100 | 100 | 100 |
| | | Grand total | mol% | 200 | 200 | 200 | 200 | 200 | 200 |
| Ratio of biomass-derived resin in amorphous polyester resin | | | % | 23 | 30 | 30 | 30 | 35 | 32 |
| Ratio of recycled resin in amorphous polyester resin | | | % | 35 | 53 | 59 | 65 | 23 | 26 |
| Ratio of biomass-derived resin + recycled resin in amorphous polyester resin | | | % | 58 | 83 | 89 | 95 | 58 | 58 |

(continued)

| | | B-1 | B-2 | B-3 | B-4 | B-5 | B-6 |
|---|---|---|---|---|---|---|---|
| Ratio of petroleum-derived resin in amorphous polyester resin | % | 43 | 18 | 12 | 5 | 43 | 43 |
| Grand total | % | 100 | 100 | 100 | 100 | 100 | 100 |

<Synthesis of Crystalline Polyester Resin C>

A 5-L four-neck flask equipped with a nitrogen introducing tube, a dewatering tube, a stirrer, and a thermocouple was charged with a plant-derived sebacic acid and 1,6-hexanediol such that a molar ratio of hydroxyl groups to carboxyl groups OH/COOH was 0.9. The mixture was reacted together with a titanium tetraisopropoxide (500 ppm based on the resin components) at 180°C for 10 hours, then heated to 200°C and reacted for 3 hours, and further reacted under a pressure of 8.3 kPa for 2 hours. Thus, a [crystalline polyester resin C] was prepared.

<Synthesis of Vinyl Resin Dispersion Liquid>

A reaction vessel equipped with a stirrer and a thermometer was charged with 683 parts of water, 11 parts of a sodium salt of a sulfate of ethylene oxide adduct of methacrylic acid (ELEMINOL RS-30, manufactured by Sanyo Chemical Industries, Ltd.), 138 parts of styrene, 138 parts of methacrylic acid, and 1 part of ammonium persulfate. The mixture was stirred at 400 rpm for 15 minutes. Thus, a white emulsion was prepared. Next, the temperature of the reaction system was raised to 75°C, and a reaction was performed for 5 hours. After that, 30 parts of a 1% ammonium persulfate aqueous solution was added to the reactor, and an aging was performed at 75°C for 5 hours. Thus, a [vinyl resin dispersion liquid] was prepared.

<Preparation of Master Batch (MB)>

First, 1,200 parts of water, 500 parts of a carbon black (PRINTEX 35, manufactured by Degussa AG) [DBP oil absorption = 42 mL/100 mg, pH=9.5), and 500 parts of the [amorphous polyester resin B-1] were mixed using a henschel mixer (manufactured by NIPPON COKE & ENGINEERING CO., LTD.). The resulting mixture was kneaded with a double roll at 150°C for 30 minutes, thereafter rolled to cool, and pulverized with a pulverizer. Thus, a [master batch] was prepared.

<Preparation of Wax Dispersion Liquid>

A vessel equipped with a stirrer and a thermometer was charged with 42 parts of carnauba wax (RN-5, manufactured by CERARICA NODA Co., Ltd., a vegetable wax having a melting point of 82°C) serving as a release agent and 420 parts of ethyl acetate, then heated to 80°C under stirring, maintained at 80°C for 5 hours, and cooled to 30°C over a period of 1 hour. The resulting liquid was subjected to a dispersion treatment using a bead mill (ULTRAVISCOMILL, manufactured by AnVIEX CO., LTD.) filled with 80% by volume of zirconia beads having a diameter of 0.5 mm, at a liquid feeding speed of 1 kg/hour and a disc peripheral speed of 6 m/sec. This dispersing treatment was performed in a 3-pass manner. Thus, a [wax dispersion liquid] was prepared.

<Preparation of Crystalline Polyester Dispersion Liquid>

A vessel equipped with a stirrer and a thermometer was charged with 308 parts of the [crystalline polyester resin C] and 1,900 parts of ethyl acetate. Next, under stirring, the mixture was heated to 80°C and held at 80°C for 5 hours, and then cooled to 30°C over a period of 1 hour. Next, a dispersion treatment using a bead mill (ULTRAVISCOMILL, manufactured by AnVIEX CO., LTD.) filled with 80% by volume of zirconia beads having a diameter of 0.5 mm was performed in a 3-pass manner. Thus, a [crystalline polyester dispersion liquid] was prepared.

(Example 1)

<Preparation of Oil Phase 1>

A vessel was charged with 165 parts of [wax dispersion liquid], 245 parts of [amorphous polyester resin B-1], 270 parts of ethyl acetate, and 75 parts of [masterbatch], which was mixed using TK HOMOMIXER (manufactured by PRIMIX Co., Ltd.) at 7,000 rpm for 60 minutes. Thus, an [oil phase 1] was prepared.

<Preparation of Aqueous Phase 1>

By stir-mixing 600 parts of water, 50 parts of [vinyl resin dispersion liquid], 225 parts of a 48.5% sodium dodecyl diphenyl ether disulfonate aqueous solution (ELEMINOL MON-7, manufactured by Sanyo Chemical Industries, Ltd.), and 90 parts of ethyl acetate, a milky white [aqueous phase 1] was obtained.

<Emulsification and Solvent Removal>

The vessel containing the [oil phase 1] was charged with 0.2 parts of the [ketimine compound] and 2,000 parts of the [aqueous phase 1], which was mixed using TK HOMOMIXER at 13,000 rpm for 20 minutes. Thus, an [emulsion slurry 1] was prepared.

A vessel equipped with a stirrer and a thermometer was charged with the [emulsion slurry 1], which was subjected to solvent removal at 30°C for 8 hours, and subsequently to an aging at 45°C for 4 hours. Thus, a [dispersion slurry 1] was prepared.

<Washing, Heating, and Drying>

First, 100 parts of [dispersion slurry 1] was filtered under reduced pressure. Next, 100 parts of ion-exchange water was added to a filter cake and mixed therewith using TK HOMOMIXER at 12,000 rpm for 10 minutes, followed by filtration (this process is hereinafter referred to as "washing process (1)"). Further, 100 parts of a 10% sodium hydroxide aqueous solution was added to a filter cake and mixed therewith using TK HOMOMIXER at 12,000 rpm for 30 minutes, followed by filtration under reduced pressure (this process is hereinafter referred to as "washing process (2)"). Next, 100 parts of a 10% hydrochloric acid aqueous solution was added to the filter cake and mixed therewith using TK HOMOMIXER at 12,000 rpm for 10 minutes, followed by filtration (this process is hereinafter referred to as "washing process (3)"). Further, 300 parts of ion-exchange water was added to the filter cake and mixed therewith using TK HOMOMIXER at 12,000 rpm for 10 minutes, followed by filtration (this process is hereinafter referred to as "washing process (4)"). The series of washing processes (1) to (4) was repeated twice.

Further, 100 parts of ion-exchange water were added to the filter cake and mixed therewith using TK HOMOMIXER at 12,000 rpm for 10 minutes. The filter cake was then heated at 50°C for 4 hours, followed by filtration.

The filter cake was dried by a circulating air dryer at 45°C for 48 hours and then sieved with a mesh having an opening of 75 μm. Thus, a [toner base particle 1] was prepared.

<External Treatment Process>

First, 100 parts of the [toner base particle 1] was mixed with 2.0 parts of hydrophobized silica (HDK-2000, manufactured by Clariant AG) using a henschel mixer, which was made to pass through a 500-mesh sieve. Thus, a [toner 1] was prepared.

(Example 2)

An [emulsion slurry 2], a [dispersion slurry 2], and a [toner base particle 2] were prepared to obtain a [toner 2] in the same manner as in Example 1, except that the [amorphous polyester B-1] in Example 1 was replaced with an [amorphous polyester B-2].

(Example 3)

An [emulsion slurry 3], a [dispersion slurry 3], and a [toner base particle 3] were prepared to obtain a [toner 3] in the same manner as in Example 1, except that the [oil phase 1] in Example 1 was replaced with an [oil phase 3] described below.

<Preparation of Oil Phase 3>

A vessel was charged with 165 parts of [wax dispersion liquid], 165 pars of [crystallin polyester dispersion liquid], 180 parts of [amorphous polyester resin B-3], 160 parts of ethyl acetate, and 75 parts of [masterbatch], which was mixed using TK HOMOMIXER (manufactured by PRIMIX Co., Ltd.) at 7,000 rpm for 60 minutes. Thus, an [oil phase 3] was prepared.

(Example 4)

<Preparation of Oil Phase 4>

A vessel was charged with 170 parts of [wax dispersion liquid], 160 pars of [crystallin polyester dispersion liquid], 175 parts of [amorphous polyester resin B-4], 155 parts of ethyl acetate, and 75 parts of [masterbatch], which was mixed using TK HOMOMIXER (manufactured by PRIMIX Co., Ltd.) at 7,000 rpm for 60 minutes. Thus, an [oil phase 4] was prepared.

<Preparation of Aqueous Phase 4>

First, 600 parts of water, 50 parts of [vinyl resin dispersion liquid], 230 parts of a 48.5% sodium dodecyl diphenyl ether disulfonate aqueous solution (ELEMINOL MON-7, manufactured by Sanyo Chemical Industries, Ltd.), 90 parts of ethyl acetate were mixed while stirring. Thus, a milky white [aqueous phase 4] was prepared.

<Emulsification and Solvent Removal>

A vessel containing the [oil phase 4] was charged with 0.2 parts of [ketimine compound], 2,000 parts of [aqueous phase 4], and 50 parts of [prepolymer A], which was then mixed using TK HOMOMIXER at 13,000 rpm for 20 minutes. Thus, an [emulsion slurry 4] was prepared.

A vessel equipped with a stirrer and a thermometer was charged with the [emulsion slurry 4], which was subjected to solvent removal at 30°C for 8 hours, and subsequently to an aging at 45°C for 4 hours. Thus, a [dispersion slurry 4] was prepared.

The obtained [dispersion slurry 4] was subjected to the same treatment as in Example 1. Thus, a [toner base particle 4] and a [toner 4] were prepared.

(Example 5)

<Preparation of Oil Phase 5>

A four-neck flask was charged with 160 parts of [wax dispersion liquid], 165 parts of [crystalline polyester dispersion liquid], 160 parts of ethyl acetate, 75 parts of [master batch], and 190 parts of [amorphous polyester resin B-4], which was stirred to dissolve and disperse them. To this mixture, 10 parts of ethyl acetate, 45 parts of [prepolymer A], 15 parts of 20% sodium hydroxide aqueous solution were added while stirring such that a neutralization ratio was 75%. Thus, an [oil phase 5] was prepared.

<Preparation of Aqueous Phase 5>

To 1100 parts of ion-exchange water, ethyl acetate was added in a ratio of 100% based on a saturated dissolution amount, to which a surfactant (sodium dodecyl sulfate) was further added in a ratio of 2% based on an aqueous phase. Thus, an [aqueous phase 5] was prepared.

<Emulsification and Solvent Removal>

The [aqueous phase 5] was gradually added to the [oil phase 5], which was subjected to phase conversion and emulsification. Subsequently, a solvent was removed. Thus, an [emulsion slurry 5] was prepared.

<Aggregation and Fusion Process>

A vessel was charged with 1500 parts of the [emulsion slurry 5] and 1600 parts of ion-exchange water, which was stirred for 5 minutes. Subsequently, 100 parts of a 20% magnesium sulfate aqueous solution was dripped into the mixture, which was further stirred for 5 minutes, then heated to 60°C. Subsequently, 75 parts of a 20% magnesium sulfate aqueous solution was further dripped into the mixture, and once diameters of particles reached 5.0 μm, 350 parts of a 20% sodium sulfate aqueous solution was added to the mixture to terminate the aggregation process. Thus, an [aggregation slurry] was prepared.

In this state, the aggregation slurry was heated to 70°C while stirring, and once the particles had a desired roundness of 0.960, the slurry was cooled. Thus, a [dispersion slurry 5] was prepared.

<Annealing, Washing, and Drying Processes>

The [dispersion slurry 5] was stored at 45°C for 10 hours, then filtered under reduced pressure, and washed and dried as described below.

(1) 100 parts of ion-exchange water was added to a filter cake and mixed using TK HOMOMIXER (at a revolution of 12,000 rpm for 10 minutes), followed by filtration.
(2) 900 parts of ion-exchange water was added to the filter cake in (1) and mixed using TK HOMOMIXER (at a revolution of 12,000 rpm for 30 minutes) by ultrasonic vibration, followed by reduced pressure filtration. This operation was repeated until an electric conductivity of a re-slurry liquid decreases to 10 μC/cm or lower, followed by filtration. Thus, a [filter cake] was prepared.

The filter cake was dried by a circulating air dryer at 45°C for 48 hours and then filtered with a mesh having an opening of 75 μm. Thus, a [toner base particle 5] was prepared.

<External Treatment Process>

Subsequently, 100 parts of a [toner base particle 5] was mixed with 2.0 parts of hydrophobized silica (HDK-2000, manufactured by Clariant AG) using a henschel mixer, which was made to pass through a 500-mesh sieve. Thus, a [toner 5] was prepared.

(Comparative Example 1)

An [emulsion slurry 6], a [dispersion slurry 6], a [toner base particle 6], and a [toner 6] were obtained in the same manner as in Example 1, except that the [amorphous polyester B-1] in Example 1 was replaced with an [amorphous polyester B-5].

(Comparative Example 2)

An [emulsion slurry 7], a [dispersion slurry 7], a [toner base particle 7], and a [toner 7] were obtained in the same manner as in Example 1, except that the [amorphous polyester B-1] in Example 1 was replaced with an [amorphous polyester B-6].

<Evaluation>

(High-Temperature Fixability)

Using a fixing unit of a color multifunction peripheral (IMAGIO MP C5503, manufactured by RICOH COMPANY, LTD.), an unfixed black solid image of 0.6 $mg/cm^2$ was formed on plain paper and fixed at different fixation temperatures. A temperature at which hot offset occurs was measured and evaluated in accordance with the following evaluation criteria.

[Evaluation Criteria]

Excellent: 190°C or higher
Good: 180°C or higher and lower than 190°C
Fair: 170°C or higher and lower than 180°C
Poor: lower than 170°C

(Low-Temperature Fixability)

Using a fixing unit of a color multifunction peripheral (IMAGIO MP C5503, manufactured by RICOH COMPANY, LTD.), an unfixed black solid image of 0.6 $mg/cm^2$ was formed on plain paper and fixed at different fixation temperatures. A temperature at which clod offset occurs was measured and evaluated in accordance with the following evaluation criteria.

[Evaluation Criteria]

Excellent: lower than 120°C
Good: 120°C or higher and lower than 125°C
Fair: 125°C or higher and lower than 130°C
Poor: 130°C or higher

(Heat-Resistant Storage Stability)

A 100 ml glass bottle was charged with 10 g of toner, which was allowed to stand at 50°C for 24 hours and then evaluated in accordance with the following evaluation criteria.

[Evaluation Criteria]

Excellent: Whole of the toner returned to the powder state by shaking the bottle 10 times
Good: Half of the toner returned to the powder state by shaking the bottle 10 times
Fair: A little of the toner returned to the powder state by shaking the bottle 10 times
Poor: No toner returned to the powder state by shaking the bottle 10 times

(Durability)

After a copy test for 100,000 pieces, the toner was removed from the developer by blow off, a mass of a remaining carrier was measured, and the mass was defined as "W1". Subsequently, this carrier is put into toluene to dissolve molten matters in toluene, and the carrier was washed and dried, then a mass of the carrier was measured, and the mass was defined as "W2". Subsequently, a spent ratio was determined according to the following equation, and evaluated in accordance with the following evaluation criteria.

$$\text{Spent ratio (\%)} = [(W1\text{-}W2)/W1] \times 100 \text{ [evaluation criteria]}$$

Excellent: 0% by mass or higher and lower than 0.01% by mass
Good: 0.01% by mass or higher and lower than 0.02% by mass
Fair: 0.02% by mass or higher and lower than 0.05% by mass
Poor: 0.05% by mass or higher

Table 2 presents evaluation results of the toners in Examples and Comparative Examples.
The binder resin refers to a total of the prepolymer A, the amorphous polyester B, and the crystalline polyester C.
Among the resins used in Examples and Comparative Examples, the amorphous polyesters B-1 to B-5 are environmentally-adaptable resins.
The amorphous polyester resins each include biomass-derived resins, recycled resins, and conventional petroleum-derived resins.

Table 2

| | Component | | Example 1 | Example 2 | Example 3 | Example 4 | Example 5 | Comparative Example 1 | Comparative Example 2 |
|---|---|---|---|---|---|---|---|---|---|
| | | | Toner 1 | Toner 2 | Toner 3 | Toner 4 | Toner 5 | Toner 6 | Toner 7 |
| Oil phase | Amorphous polyester resin | B-1 | 245 | | | | | | |
| | | B-2 | | 245 | | | | | |
| | | B-3 | | | 180 | | | | |
| | | B-4 | | | | 175 | 190 | | |
| | | B-5 | | | | | | 245 | |
| | | B-6 | | | | | | | 245 |
| | Crystalline polyester dispersion liquid | | | | 165 | 160 | 165 | | |
| | Prepolymer A | | | | | 50 | 45 | | |
| | Wax dispersion liquid | | 165 | 165 | 165 | 170 | 160 | 165 | 165 |
| | Master batch | | 75 | 75 | 75 | 75 | 75 | 75 | 75 |
| Water phase | Vinyl resin dispersion liquid | | 50 | 50 | 50 | 50 | | 50 | 50 |
| Binder resin | Ratio of environmentally-adaptable resins (%) | | 57.5 | 82.5 | 82.9 | 82.9 | 82.9 | 57.5 | 57.5 |
| | Ratio of recycled resins (%) | | 35.0 | 52.5 | 54.8 | 56.7 | 56.7 | 22.5 | 26.0 |
| | Ratio of biomass-derived resins (%) | | 22.5 | 30.0 | 28.1 | 26.2 | 26.2 | 35.0 | 31.5 |
| | Ratio of petroleum-derived resins (%) | | 42.5 | 17.5 | 17.1 | 17.1 | 17.1 | 42.5 | 42.5 |
| Evaluation | Low-temperature fixability | | Good | Good | Excellent | Excellent | Excellent | Good | Good |
| | High-temperature fixability | | Good | Good | Good | Good | Excellent | Good | Good |
| | Heat-resistant storage stability | | Good | Good | Good | Good | Excellent | Poor | Fair |
| | Durability | | Good | Good | Good | Good | Excellent | Poor | Fair |

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

## Claims

1. A resin particle comprising:

   a binder resin, the binder resin comprising a biomass-derived resin and a recycled resin,
   wherein a content (% by mass) of the biomass-derived resin and a content (% by mass) of the recycled resin in the binder resin satisfy relational equation (1),
   wherein a biomass degree (%) represented by $^{14}C$ concentration (pMC) x 0.935, is 10% or higher,
   wherein the $^{14}C$ concentration is determined by a radioactive carbon dating method,
   wherein the recycled resin comprises at least one of polyethylene terephthalate (PET) and polybutylene terephthalate (PBT), and
   wherein the recycled resin comprises products processed to flakes.

$$\text{Content of recycled resin} > \text{Content of biomass-derived resin} \ldots (1)$$

2. The resin particle according to claim 1, wherein the content of the recycled resin and the content of the biomass-derived resin in the binder resin are 80% by mass or more in total.

3. The resin particle according to claim 1 or 2, wherein the binder resin further comprises a polyester resin.

4. The resin particle according to claim 3, wherein the polyester resin comprises a crystalline polyester resin.

5. The resin particle according to any one of claims 1 to 4, further comprising a colorant and a release agent.

6. A toner comprising:

   the resin particle according to claim 5; and
   an external additive added to the resin particle.

7. A developer comprising the toner according to claim 6.

8. A developer storage container comprising:

   a container; and
   the developer according to claim 7 contained in the container.

9. A resin particle producing method comprising:

   mixing at least one of a binder resin and a precursor of the binder resin, the binder resin comprising a biomass-derived resin and a recycled resin,
   wherein a content (% by mass) of the biomass-derived resin and a content (% by mass) of the recycled resin in the binder resin satisfy relational equation (1),
   wherein the biomass degree (%) represented by $^{14}C$ concentration (pMC) x 0.935, is 10% or higher,
   wherein the $^{14}C$ concentration is determined by a radioactive carbon dating method,
   wherein the recycled resin comprises at least one of polyethylene terephthalate (PET) and polybutylene terephthalate (PBT), and
   wherein the recycled resin comprises products processed to flakes.

$$\text{Content of recycled resin} > \text{Content of biomass-derived resin} \ldots (1)$$

**10.** The resin particle producing method according to claim 9, further comprising:

dissolving or dispersing at least one of the binder resin and the precursor in an organic solvent to prepare a solution;
adding water to the solution to convert a phase of the solution from a water-in-oil dispersion to an oil-in-water dispersion;
removing the organic solvent from the oil-in-water dispersion to obtain a fine particle dispersion liquid; and
aggregating fine particles in the fine particle dispersion liquid to obtain aggregated particles.

**11.** The resin particle producing method according to claim 9 or 10, wherein the precursor of the binder resin comprises a prepolymer having a functional group reactive with an active hydrogen group.

**12.** A toner producing method comprising:
adding an external additive to the resin particle produced by the resin particle producing method according to any one of claims 9 to 11.

**13.** An image forming apparatus comprising:

an electrostatic latent image bearer (231Y, 231C, 231M, 231K);
an electrostatic latent image forming device (230, 232Y, 232C, 232M, 232K) configured to form an electrostatic latent image on the electrostatic latent image bearer (231Y, 231C, 231M, 231K);
a developing device (180Y, 180C, 180M, 180K) containing the toner according to claim 6 or the developer according to claim 7, the developing device (180Y, 180C, 180M, 180K) configured to develop the electrostatic latent image using the toner or the developer to form a visible image;
a transfer device (240) configured to transfer the visible image onto a recording medium (P); and
a fixing device (250) configured to fix the transferred visible image on the recording medium (P).

**14.** An image forming method, comprising:

forming an electrostatic latent image on an electrostatic latent image bearer;
developing the electrostatic latent image using the toner according to claim 6 or the developer according to claim 7 to form a visible image;
transferring the visible image onto a recording medium; and
fixing the transferred visible image on the recording medium.

## Patentansprüche

**1.** Harzteilchen, umfassend:

ein Binderharz, wobei das Binderharz ein von Biomasse abgeleitetes Harz und ein recyceltes Harz umfasst,
wobei ein Gehalt (Massen-%) an von Biomasse abgeleitetem Harz und ein Gehalt (Massen-%) an recyceltem Harz in dem Binderharz die Verhältnisgleichung (1) erfüllen,
wobei ein Biomassengrad (%), der durch die $^{14}C$-Konzentration (pMC) x 0,935 dargestellt ist, 10 % oder höher ist,
wobei die $^{14}C$-Konzentration durch ein Radiokohlenstoffdatierungsverfahren bestimmt wird,
wobei das recycelte Harz mindestens eines von Polyethylenterephthalat (PET) und Polybutylenterephthalat (PBT) umfasst, und
wobei das recycelte Harz zu Flocken verarbeitete Produkte umfasst.

$$\text{Gehalt an recyceltem Harz} > \text{Gehalt an von Biomasse abgeleitetem Harz} \quad \ldots (1)$$

**2.** Harzteilchen nach Anspruch 1, wobei der Gehalt an recyceltem Harz und der Gehalt an von Biomasse abgeleitetem Harz in dem Binderharz insgesamt 80 Massen-% oder mehr betragen.

**3.** Harzteilchen nach Anspruch 1 oder 2, wobei das Binderharz ferner ein Polyesterharz umfasst.

**4.** Harzteilchen nach Anspruch 3, wobei das Polyesterharz ein kristallines Polyesterharz umfasst.

5. Harzteilchen nach einem der Ansprüche 1 bis 4, ferner umfassend einen Farbstoff und ein Trennmittel.

6. Toner, umfassend:

das Harzteilchen nach Anspruch 5; und
ein externes Additiv, das dem Harzteilchen zugegeben wird.

7. Entwickler, umfassend den Toner nach Anspruch 6.

8. Entwickleraufbewahrungsbehälter, umfassend:

einen Behälter; und
den Entwickler nach Anspruch 7, der in dem Behälter enthalten ist.

9. Harzteilchenherstellungsverfahren, umfassend:

Mischen von mindestens einem Binderharz und einem Vorläufer des Binderharzes, wobei das Binderharz ein von Biomasse abgeleitetes Harz und ein recyceltes Harz umfasst,
wobei ein Gehalt (Massen-%) an von Biomasse abgeleitetem Harz und ein Gehalt (Massen-%) an recyceltem Harz in dem Binderharz die Verhältnisgleichung (1) erfüllen,
wobei der Biomassengrad (%), der durch die $^{14}$C-Konzentration (pMC) x 0,935 dargestellt ist, 10 % oder höher ist,
wobei die $^{14}$C-Konzentration durch ein Radiokohlenstoffdatierungsverfahren bestimmt wird,
wobei das recycelte Harz mindestens eines von Polyethylenterephthalat (PET) und Polybutylenterephthalat (PBT) umfasst, und
wobei das recycelte Harz zu Flocken verarbeitete Produkte umfasst.

$$\text{Gehalt an recyceltem Harz} > \text{Gehalt an von Biomasse abgeleitetem Harz} \ldots (1)$$

10. Harzteilchenherstellungsverfahren nach Anspruch 9, ferner umfassend:

Lösen oder Dispergieren mindestens eines von dem Binderharz und dem Vorläufer in einem organischen Lösungsmittel, um eine Lösung vorzubereiten;
Zugeben von Wasser zu der Lösung, um eine Phase der Lösung aus einer Wasserin-Öl-Dispersion in eine Öl-in-Wasser-Dispersion umzuwandeln;
Entfernen des organischen Lösungsmittels aus der Öl-in-Wasser-Dispersion, um eine Dispersionsflüssigkeit von feinen Teilchen zu erhalten; und
Aggregieren von feinen Teilchen in der Dispersionsflüssigkeit von feinen Teilchen, um aggregierte Teilchen zu erhalten.

11. Harzteilchenherstellungsverfahren nach Anspruch 9 oder 10, wobei der Vorläufer des Binderharzes ein Präpolymer mit einer funktionellen Gruppe, die mit einer aktiven Wasserstoffgruppe reaktiv ist, umfasst.

12. Tonerherstellungsverfahren, umfassend:
Zugeben eines externen Additivs zu dem durch das Harzteilchenherstellungsverfahren hergestellten Harzteilchen nach einem der Ansprüche 9 bis 11.

13. Bilderzeugungsgerät, umfassend:

einen Träger eines elektrostatischen latenten Bildes (231Y, 231C, 231M, 231K);
eine Vorrichtung zum Erzeugen eines elektrostatischen latenten Bildes (230, 232Y, 232C, 232M, 232K), die konfiguriert ist, um ein elektrostatisches latentes Bild auf dem Träger eines elektrostatischen latenten Bildes (231Y, 231C, 231M, 231K) zu erzeugen;
eine Entwicklungsvorrichtung (180Y, 180C, 180M, 180K), die den Toner nach Anspruch 6 oder den Entwickler nach Anspruch 7 enthält, wobei die Entwicklungsvorrichtung (180Y, 180C, 180M, 180K) konfiguriert ist, um das elektrostatische latente Bild unter Verwendung des Toners oder des Entwicklers zu entwickeln, um ein sichtbares Bild zu erzeugen;
eine Übertragungsvorrichtung (240), die konfiguriert ist, um das sichtbare Bild auf ein Aufzeichnungsmedium

(P) zu übertragen; und
eine Fixiervorrichtung (250), die konfiguriert ist, um das übertragene sichtbare Bild auf dem Aufzeichnungsmedium (P) zu fixieren.

**14.** Bilderzeugungsverfahren, umfassend:

Erzeugen eines elektrostatischen latenten Bildes auf einem Träger eines elektrostatischen latenten Bildes;
Entwickeln des elektrostatischen latenten Bildes unter Verwendung des Toners nach Anspruch 6 oder des Entwicklers nach Anspruch 7, um ein sichtbares Bild zu erzeugen;
Übertragen des sichtbaren Bildes auf ein Aufzeichnungsmedium; und
Fixieren des übertragenen sichtbaren Bildes auf dem Aufzeichnungsmedium.

**Revendications**

**1.** Particule de résine comprenant :

une résine liante, la résine liante comprenant une résine dérivée de la biomasse et une résine recyclée,
dans laquelle une teneur (% en masse) en résine dérivée de la biomasse et une teneur (% en masse) en résine recyclée dans la résine liante satisfont à l'équation relationnelle (1),
dans laquelle un degré de biomasse (%) représenté par la concentration en $^{14}C$ (pMC) x 0,935, est de 10 % ou plus,
dans laquelle la concentration en $^{14}C$ est déterminée par un procédé de datation par carbone radioactif,
dans laquelle la résine recyclée comprend au moins l'un des polyéthylène téréphtalate (PET) et polybutylène téréphtalate (PBT), et
dans laquelle la résine recyclée comprend des produits transformés en flocons.

$$\text{Teneur en résine recyclée} > \text{Teneur en résine dérivée de la biomasse} \ldots (1)$$

**2.** Particule de résine selon la revendication 1, dans laquelle la teneur en résine recyclée et la teneur en résine dérivée de la biomasse dans la résine liante sont de 80 % en masse ou plus au total.

**3.** Particule de résine selon la revendication 1 ou 2, dans laquelle la résine liante comprend en outre une résine polyester.

**4.** Particule de résine selon la revendication 3, dans laquelle la résine polyester comprend une résine polyester cristalline.

**5.** Particule de résine selon l'une quelconque des revendications 1 à 4, comprenant en outre un colorant et un agent de démoulage.

**6.** Toner comprenant :

la particule de résine selon la revendication 5 ; et
un additif externe ajouté à la particule de résine.

**7.** Révélateur comprenant le toner selon la revendication 6.

**8.** Récipient de stockage de révélateur comprenant :

un récipient ; et
le révélateur selon la revendication 7 contenu dans le récipient.

**9.** Procédé de production de particule de résine comprenant :

le mélange d'au moins une résine liante et un précurseur de la résine liante, la résine liante comprenant une résine dérivée de la biomasse et une résine recyclée,
dans lequel une teneur (% en masse) en résine dérivée de la biomasse et une teneur (% en masse) en résine

recyclée dans la résine liante satisfont à l'équation relationnelle (1),
dans lequel le degré de biomasse (%) représenté par la concentration en $^{14}C$ (pMC) x 0,935, est de 10 % ou plus,
dans lequel la concentration en $^{14}C$ est déterminée par un procédé de datation par carbone radioactif,
dans lequel la résine recyclée comprend au moins l'un des polyéthylène téréphtalate (PET) et polybutylène téréphtalate (PBT), et
dans lequel la résine recyclée comprend des produits transformés en flocons.

$$\text{Teneur en résine recyclée} > \text{Teneur en résine dérivée de la biomasse} \ldots (1)$$

**10.** Procédé de production de particule de résine selon la revendication 9, comprenant en outre :

la dissolution ou dispersion d'au moins l'une de la résine liante et du précurseur dans un solvant organique pour préparer une solution ;
l'ajout d'eau à la solution pour convertir une phase de la solution d'une dispersion eau-dans-huile en une dispersion huile-dans-eau ;
l'élimination du solvant organique de la dispersion huile-dans-eau pour obtenir un liquide de dispersion de particules fines ; et
l'agrégation des particules fines dans le liquide de dispersion de particules fines pour obtenir des particules agrégées.

**11.** Procédé de production de particule de résine selon la revendication 9 ou 10, dans lequel le précurseur de la résine liante comprend un prépolymère ayant un groupe fonctionnel réactif avec un groupe hydrogène actif.

**12.** Procédé de production de toner comprenant :
l'ajout d'un additif externe à la particule de résine produite par le procédé de production de particule de résine selon l'une quelconque des revendications 9 à 11.

**13.** Appareil de formation d'image comprenant :

un support d'image latente électrostatique (231Y, 231C, 231M, 231K) ;
un dispositif de formation d'image latente électrostatique (230, 232Y, 232C, 232M, 232K) configuré pour former une image latente électrostatique sur le support d'image latente électrostatique (231Y, 231C, 231M, 231K) ;
un dispositif de révélation (180Y, 180C, 180M, 180K) contenant le toner selon la revendication 6 ou le révélateur selon la revendication 7, le dispositif de révélation (180Y, 180C, 180M, 180K) configuré pour développer l'image latente électrostatique en utilisant le toner ou le révélateur pour former une image visible ;
un dispositif de transfert (240) configuré pour transférer l'image visible sur un support d'enregistrement (P) ; et
un dispositif de fixation (250) configuré pour fixer l'image visible transférée sur le support d'enregistrement (P).

**14.** Procédé de formation d'image comprenant :

la formation d'une image latente électrostatique sur un support d'image latente électrostatique ;
le développement de l'image latente électrostatique en utilisant le toner selon la revendication 6 ou le révélateur selon la revendication 7 pour former une image visible ;
le transfert de l'image visible sur un support d'enregistrement ; et
la fixation de l'image visible transférée sur le support d'enregistrement.

FIG. 1

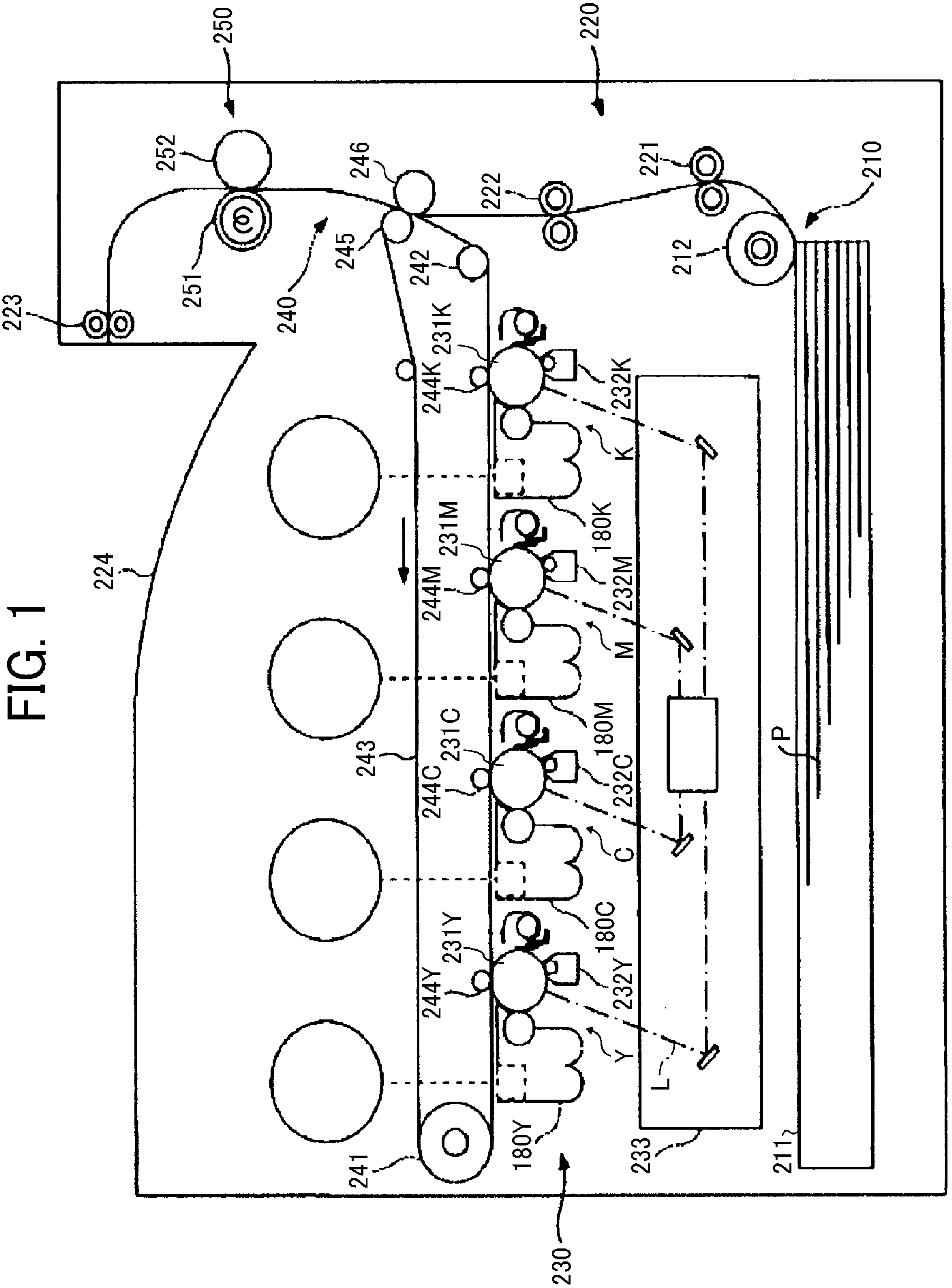
250
220
252
246
222
221
210
251
245
242
212
223
240
231K
244K
232K
K
180K
224
231M
244M
232M
M
180M
243
231C
244C
232C
C
P
180C
231Y
244Y
232Y
Y
L
241
180Y
233
211
230

FIG. 2

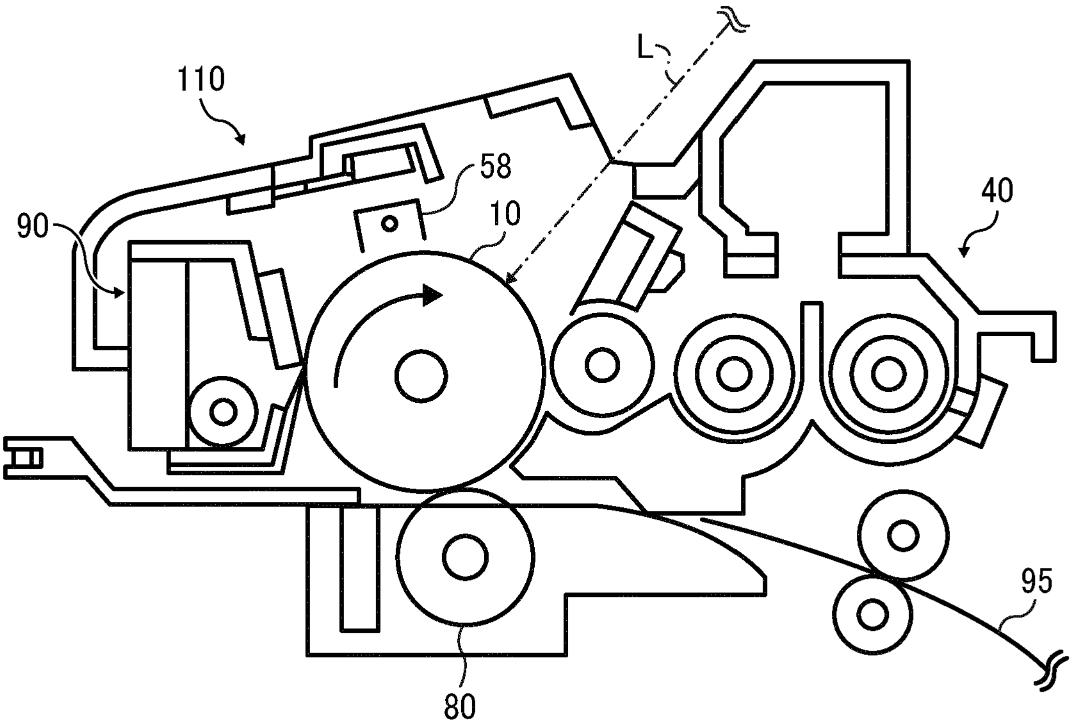

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6138021 B
- JP 3693334 B
- JP 5473252 B
- JP 2011257568 A
- JP 2004054258 A
- JP 4050051 B